(19) Europäisches Patentamt
European Patent Office
Office européen des brevets

(11) Veröffentlichungsnummer : **0 142 744**
**B1**

(12) # EUROPÄISCHE PATENTSCHRIFT

(45) Veröffentlichungstag der Patentschrift : **15.03.89**

(51) Int. Cl.$^4$ : **H 02 P 5/40**

(21) Anmeldenummer : **84112981.0**

(22) Anmeldetag : **27.10.84**

(54) **Verfahren und Vorrichtung zum Bremsen eines mit einer Bremseinrichtung versehenen Motors.**

(30) Priorität : **08.11.83 DE 3340277**

(43) Veröffentlichungstag der Anmeldung : **29.05.85 Patentblatt 85/22**

(45) Bekanntmachung des Hinweises auf die Patenterteilung : **15.03.89 Patentblatt 89/11**

(84) Benannte Vertragsstaaten : **AT BE CH DE FR GB IT LI LU NL SE**

(56) Entgegenhaltungen :
**DE-A- 1 638 973**
**DE-A- 2 646 893**
**DE-A- 3 034 276**
**US-A- 3 786 327**

(73) Patentinhaber : **Schröcker, Rainer, Dipl.-Ing.**
**Obere Burghalde 47**
**D-7250 Leonberg (DE)**

(72) Erfinder : **Schröcker, Rainer, Dipl.-Ing.**
**Obere Burghalde 47**
**D-7250 Leonberg (DE)**

(74) Vertreter : **Rüger, Rudolf, Dr.-Ing. et al**
**Webergasse 3 Postfach 348**
**D-7300 Esslingen/Neckar (DE)**

**EP 0 142 744 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Verfahren zum Bremsen eines mit einer Bremseinrichtung versehenen Motors mit den Merkmalen des Oberbegriffs des Anspruches 1. Ferner geht die Erfindung aus von einer Schaltungsanordnung zur Durchführung des Verfahrens mit den Merkmalen des Oberbegriffs des Anspruches 2.

Aus der DE-B- 26 54 327 ist eine Brems- und Anfahrregelung für Drehstromasynchronmotoren zum Antrieb von Aufzügen bekannt, bei der der Momentanwert der Drehzahl mit einem zeitlich veränderlichen Sollwert verglichen wird. Dabei darf sich der Sollwert nicht sprunghaft ändern, weshalb dort eine Schaltung vorgesehen ist, die sprunghafte Sollwertänderungen beim Übergang von der schnellen Aufzugfahrt in die langsame bzw. beim umgekehrten Übergang unterdrücken.

Bei dieser bekannten Schaltung legen Steuerschalter für die Aufzugsbewegung Spannungen unterschiedlicher Polarität sowohl an einen Differentiator als auch an einen Addierverstärker. Die Ausgangssignale beider Verstärker werden in einem Dioden-Widerstand-Netzwerk einander überlagert und einem invertierenden Integrator zugeführt. Das an dem Integrator abgegebene Signal stellt den gewünschten, sich nur verhältnismäßig langsam ändernden Sollwert für die Motordrehzahl dar.

Um das Aufintegrieren zu beenden, wenn die Ausgangsspannung des Integrators gleich der sprunghaft geänderten Spannung an den Eingängen der Schaltung ist, ist das Ausgangssignal des Integrators außerdem zu dem Addierverstärker zurückgeführt.

Infolge dieser Schaltung wird sowohl beim Anfahren als auch beim Bremsen die maximale Beschleunigung oder Verzögerung allmählich auf ihren Maximalwert gesteuert und anschließend kurz vor Erreichen der Maximalgeschwindigkeit oder im Falle des Bremsens beim Erreichen der Schleichgeschwindigkeit wieder allmählich zurückgesteuert.

Bei der bekannten Schaltung wird keine von der Drehzahl des Motors unabhängige konstante Bremszeit angestrebt, wie sie beispielsweise zur Unfallverhütung bei Werkzeugmaschinen benötigt wird.

Insbesondere hochtourige Holzbearbeitungsmaschinen, bei denen Werkzeuge mit stark unterschiedlichem Durchmesser häufig unmittelbar mit dem Anker des Motors verbunden sind, ergeben sich stark streuende Auslaufzeiten der Maschine, je nach Ausgangsdrehzahl und Schwungmoment des eingespannten Werkzeugs. Diese stark unterschiedlichen Bremszeiten führen durch den Stroboskopeffekt von Leuchtstofflampen zu sehr unfallträchtigen Situationen, weil durch den Stroboskopeffekt ein Stillstand der Werkzeuge vorgetäuscht wird. Die Bedienperson greift dann unter Umständen in das scheinbar stehende Werkzeug hinein.

Zur Regelung der Beschleunigung eines Drehstromfördermotors während des Anfahrvorganges ist es aus VEM-Handbuch « Die Technik der elektrischen Antriebe » Grundlagen, 2. Aufl., Berlin 1967, S. 326, bekannt, das Ausgangssignal eines mit dem Fördermotor gekuppelten Tachogenerators zunächst zu differenzieren. Der erhaltene Drehzahlgradient wird in einem Regler mit einem Sollwert verglichen, der entsprechend ein Stellglied für den Fördermotor beeinflußt. Es kann auf diese Weise ein gewünschtes Beschleunigungsprogramm bis zum Erreichen der Nenndrehzahl eingehalten werden.

Ausgehend von dem eingangs genannten Stand der Technik ist es Aufgabe der Erfindung, ein Verfahren und eine Vorrichtung zum Bremsen eines mit einer Bremseinrichtung versehenen Motors zu schaffen, die im Bremsfall einen vorgegebenen Drehzahlverlauf ermöglichen, und zwar unabhängig von der Drehzahl zu Bremsbeginn.

Diese Aufgabe wird erfindungsgemäß durch das Verfahren mit den Merkmalen des Anspruches 1 sowie durch die Vorrichtung mit den Merkmalen des Anspruches 2 gelöst.

Hierdurch ist es insbesondere möglich, den Motor unabhängig von der jeweils angekuppelten Schwungmasse innerhalb einer jeweils konstanten Zeit bis zum Stillstand abzubremsen, wobei auch die Drehzahl zu Beginn des Bremsvorganges keinen Einfluß auf die Bremszeit ausübt.

Als Bremseinrichtung kommt hierzu vorzugsweise eine Wirbelstrombremse in Frage, deren Bremsgleichstrom gemäß dem jeweiligen Drehzahlverlauf eingestellt wird. Die Wirbelstrombremse kann auch durch den Anker einer Drehfeldmaschine gebildet sein, der mit Gleichstrom im Bremsbetrieb gefahren wird.

Eine besonders verlustleistungsarme Bremsregelung wird erhalten, wenn der Bremsgleichstrom mittels einer Phasenanschnittsteuerung erzeugt wird, bei der der Anschnittwinkel gemäß dem jeweiligen Drehzahlverlauf eingestellt wird.

Wenn die Bremseinrichtung über eine Phasenanschnittsteuerung mit Gleichstrom versorgt wird, steuert der Regler den Phasenanschnittwinkel. Auch hierbei kann der Anker und der Ständer des Motors die Bremseinrichtung bilden.

Eine sehr genaue Regelung, bei der der gewünschte Drehzahlverlauf nur wenig von dem Sollverlauf abweicht, wird erreicht, wenn der Regler ein Integralregler ist. Dabei kann die Ansprechgeschwindigkeit des Reglers erhöht werden, wenn der Regler ein Proportional-Integralregler ist.

Um zu verhindern, daß beim Umschalten auf den Bremsbetrieb zunächst der Regler eine verhältnismäßig lange Zeit braucht, um sich auf den jeweiligen Wert einzustellen, ist es vorteilhaft, wenn der Regler eine Einrichtung zum Einstellen eines Anfangswertes aufweist. Der Anfangswert wird dann zweckmäßigerweise auf den im Mittel zu erwartenden Wert eingestellt, so daß der Regler nur noch eine verhältnismäßig kleine Regelabweichung nachzuregeln hat.

Der Regler kann sehr einfach mit Hilfe eines als Integrator gegengekoppelten Differenzverstärkers aufgebaut sein.

Der oben genannte Anfangswert des Reglers läßt sich im einfachsten Falle dadurch einstellen, daß der Regler einen Umschalter an seinem Eingang aufweist, durch den der Eingang des Integrators während einer vorbestimmten Zeit zu Beginn des Bremsvorganges an eine Gleichspannungsquelle angeschaltet wird, während der Integrator während der restlichen Zeit des Bremsens an den Ausgang des Subtrahierers angeschlossen ist. Auf diese Weise lassen sich Regelfehler eliminieren, die durch Einschwingvorgänge am Beginn des Bremsvorganges auftreten können, beispielsweise bei der Drehzahlerfassung.

Der Addierer sowie der Integrator lassen sich auf elektronische Weise sehr einfach zu einem addierenden Integrator zusammenfassen, der zwei Eingänge aufweist, wobei einem der Eingänge das Signal mit negativem Vorzeichen zugeführt wird. In diesem Falle sitzt der Schalter für die Einstellung des Anfangswertes natürlich zwischen den beiden Eingängen des addierenden Integrators und dem Eingang des aktiven Bauelementes des Integrators.

Die Bildung des von der Motorausgangsdrehzahl abhängigen Sollwertes erfolgt sehr einfach durch eine lediglich bei Bremsbeginn die Motordrehzahl erfassende Sample- and Holdeinrichtung, die eine Bewertungseinrichtung aufweist, bei der der Betrag der Größe des Ausgangssignals proportional mit der Drehzahl steigt.

Da es geschehen kann, daß beim Unterschreiten einer bestimmten Mindestdrehzahl die in der Schaltungsanordnung zu verarbeitenden Signale einen zu kleinen Wert annehmen, der keine ordnungsgemäße Auswertung mehr gestattet, ist es sinnvoll, eine Einrichtung vorzusehen, die das Unterschreiten einer minimalen Motordrehzahl erkennt und den Regler in einen zweiten Zustand umschaltet, in dem er ein Signal mit einem konstanten Wert an die Bremseinrichtung abgibt. Diese Einrichtung zum Erkennen der Minimaldrehzahl kann entweder eine zweite Drehzahlmeßeinrichtung aufweisen, in die das der Motordrehzahl proportionale Signal eingespeist wird, oder sie kann als Schwellwertdiskriminator an die bereits vorhandene Drehzahlmeßeinrichtung angeschlossen sein. Damit der Regler in den zweiten Zustand umgeschaltet werden kann, enthält er einen durch die Einrichtung zum Erkennen der Minimaldrehzahl betätigten Umschalter mit zwei Eingängen, von denen der eine Eingang an den Ausgang des Subtrahierers bzw. den Ausgang des Umschalt rs für den Anfangswert angeschlossen ist, während der andere an einer Konstantspannungsquelle liegt.

Wenn das der Motordrehzahl proportionale Signal ein Frequenzsignal ist, kann die Einrichtung zum Erkennen der Minimaldrehzahl sehr einfach mittels eines retriggerbaren Monoflops aufgebaut werden, in das das der Motordrehzahl proportionale Frequenzsignal eingespeist wird und das beim Unterschreiten der Minimaldrehzahl das Signal zum Umschalten des Reglers abgibt.

Eine erhebliche Verringerung des bauteilemäßigen Aufwands und damit eine erhebliche Verringerung der Baugröße wird dadurch erzielt, daß die Drehzahlmeßeinrichtung, die Subtrahiereinrichtung, der Regler mit den zugehörigen Umschaltern sowie die Sample- and Holdeinrichtung durch einen Mikrocomputer verwirklicht sind. Darüber hinaus kann auch die Differenziereinrichtung sowie die Einrichtung zum Erkennen der Mindestdrehzahl durch den Mikrocomputer realisiert sein.

In der Zeichnung sind Ausführungsbeispiele des Gegenstandes der Erfindung dargestellt. Es zeigen :

Fig. 1 die Schaltungsanordnung gemäß der Erfindung zum Bremsen eines Motors entsprechend einer vorgegebenen Kennlinie in einem Blockschaltbild,

Fig. 2 ein ausführliches Schaltbild der Schaltungsanordnung nach Fig. 1,

Fig. 3 das Schaltwellendiagramm zum Programmablauf in der Schaltungsanordnung nach Fig. 2,

Fig. 4 die Schaltungsanordnung gemäß der Erfindung mit einem Mikrocomputer und

Fig. 5a bis 6f das Flußdiagramm für einen Programmablauf in dem Mikrocomputer nach Fig. 4.

In Fig. 1 ist eine Schaltungsanordnung 1 zum Steuern des Bremsvorganges eines Motors, veranschaulicht, die dafür sorgt, daß der Motor vorzugsweise eine mit Gleichstrom gebremste Drehfeldmaschine 2, unabhängig von der jeweils angekuppelten Schwungmasse und der jeweiligen Ausgangsdrehzahl bei Beginn des Bremsvorganges immer innerhalb einer im wesentlichen konstanten Zeit nach Beginn des Bremsvorganges zum Stillstand kommt. Die Bremskraft wird hierbei durch einen Gleichstromsteller, einen Voll-.oder Halbwellengleichrichter mit Phasenanschnittsteuerung 3 festgelegt. Die Relais zum Umschalten der Drehfeldmaschine 2 aus dem Motorbetrieb in den Bremsbetrieb sowie die übrigen dazu erforderlichen Bauelemente sind, da es hier auf sie nicht ankommt, nicht gezeigt.

Die Schaltungsanordnung 1 enthält eine Drehzahlmeßeinrichtung 4 in Gestalt eines Frequenzspannungswandlers, in dessen Eingang 5 ein der Drehzahl des Motors 2 proportionales Frequenzsignal eingespeist wird. Dieses Frequenzsignal kann in bekannter Weise von einem mit der Welle des Motors 2 gekuppelten Impulsgeber.

An seinem Ausgang 6 gibt der Frequenzspannungswandler ein der Drehzahl des Motors 2 proportionales Spannungssignal ab, das in einen Eingang 7 einer Differenziereinrichtung 8 eingespeist wird. Durch die Differenzierung des dem Eingang 7 zugeführten Spannungssignals entsteht an dem Ausgang 9 der Differenziereinrichtung ein der Drehzahländerung proportionales Spannungssignal, das von dem Ausgang 9 in einen von zwei Eingängen 11 und 12 eines Reglers 13 gelangt. Der andere Eingang 12 des Reglers 13 wird mit einem Sollwert beaufschlagt, der bei der gezeigten Schaltungsanordnung mittels einer Sample- and Holdeinrichtung 14 gewonnen wird. Die Sample- and Holdeinrichtung 14 weist einen an den Ausgang 6 des Frequenzspannungswandlers angeschlossenen Signaleingang 15, ein den Sollwert führenden und an den Signaleingang 12 des Reglers 13 angeschlossenen Signalausgang 16 sowie einen Steuereingang 17 auf, über den die Sample- and Holdeinrichtung 14 zu Beginn des Bremsvorganges kurzzeitig aktiviert wird.

Mit Hilfe der Sample- and Holdeinrichtung 14 wird aus dem der Drehzahl proportionalen Spannungssignal am Ausgang 6 ein Sollwert für den Regler 13 erzeugt, der über den gesamten Bremszyklus konstant bleibt und von der Motordrehzahl bei Bremsbeginn abhängig ist.

Da dem Regler 13 an dem Eingang 12 der Sollwert mit negativem Vorzeichen zugeführt wird, enthält er zur Bildung der Regeldifferenz einen Addierer 18, dessen beide Eingänge die Eingänge 11 und 12 des Reglers 13 bilden und dessen Ausgang 19 zu einem Umschalter 21 führt, dessen anderer Kontakt 22 auf Nullpotential liegt. Der Umschaltkontakt 23 des beispielsweise als elektronischen Analogschalter ausgebildeten Umschalters 21 liegt an einem Eingang 24 eines Integrators 25, dessen Ausgang 26 den Ausgang des Reglers 13 bildet, und die Stellgröße für das nachgeschaltete Stellglied in Gestalt der Phasenanschnittssteuerung 3 führt, die mit ihrem Eingang 27 an den Ausgang 26 angeschlossen ist, während über Leitungen 28 und 29 die Netzwechselspannung zugeführt wird. Eine geeignete Schaltung für die Phasenanschnittssteuerung ist in « Technische Mitteilungen aus dem Bereich Bauelemente, integrierte Phasenanschnittsteuerung TCA 780 für die Leistungselektronik », Siemens Bestell-Nr. B 1884, beschrieben, wobei Pin 11 der integrierten Schaltung, die mittels eines Subtrahierers in der Phase umgekehrte Stellgröße zugeführt wird.

Da es vorkommen kann, daß bei bestimmten Dimensionierungen der Schaltungsanordnung 1 die Drehzahlerfassung bei kleinen Motordrehzahlen, wie sie am Ende der Bremsphase auftreten, Schwierigkeiten machen, ist zusätzlich eine Einrichtung 31 zur Erkennung einer Minimaldrehzahl vorgesehen, deren Eingang 32 an den Eingang 5 des Frequenzspannungswandlers 4 angeschlossen ist. Die Einrichtung 31 zur Erkennung der minimalen Drehzahl erzeugt an ihrem Ausgang 33 ein digitales Schaltsignal, mit dem der Umschalter 21 des Reglers 13 betätigt wird, und zwar in der Weise, daß sobald die Einrichtung 31 das Unterschreiten der vorgegebenen Minimaldrehzahl erkennt, der Eingang 24 des Integrators 25 über den Umschalter 21 auf Massepotential gelegt wird, so daß die Stellgröße am Ausgang 26 des Reglers 13 von da an konstant gehalten wird.

Damit bei Beginn des Bremszyklus bereits mit annähernd der richtigen Stellgröße gebremst wird, und zwar unabhängig von irgendwelchen noch ablaufenden Einschwingvorgängen, enthält der Integrator 25 noch eine Einrichtung zur Einstellung eines Anfangswertes, die über einen Steuereingang 34 ein- bzw. ausgeschaltet wird. Der Anfangswert wird zweckmäßigerweise auf einen Wert eingestellt, der dem Wert enspricht, den der Integrator im Mittel im eingeschwungenen Zustand einnimmt. Wenn mit der Schaltungsanordnung 1 im Bremsfall eine konstante Motordrehzahl erzeugt werden soll, entfällt die Differenziereinrichtung 8 sowie die Sample- and Holdeinrichtung 14, so daß dem Eingang 11 des Reglers 13 nicht mehr ein der Drehzahländerung proportionales Signal, sondern ein der Drehzahl proportionales Signal aus dem Signalausgang 6 zugeführt wird. Die Führungsgröße am Eingang 12 wird dann als fester oder variabler Wert über eine Gleichspannungsquelle dem Eingang 12 zugeführt. Bei dieser Schaltungsauslegung kann auch die Einrichtung 31 zum Erkennen der Minimaldrehzahl entfallen.

Das Schaltbild einer im wesentlichen in Analogtechnik arbeitenden Schaltungsanordnung, wie sie in Fig. 1 dargestellt ist, zeigt Fig. 2, in der für die den Bauelementen nach Fig. 1 entsprechenden Bauelemente bzw. Ausgänge und Leitungen dieselben Bezugszeichen verwendet sind ; die Stromversorgungsleitungen für die aktiven Bauelemente sind in der üblichen Weise weggelassen.

Der Frequenzspannungswandler 4 enthält ein Monoflop 36, dessen Eingang A den Eingang 5 des Frequenzspannungswandlers 4 bildet und in den das der Drehzahl des Motors 2 proportionale Frequenzsignal eingespeist wird. Die Zeitkonstante des von dem Ausgang Q̄ zu dem Eingang B̄ in bekannter Weise rückgekoppelten Monoflops 36, dessen zeitbestimmende Kapazität aus Übersichtlichkeitsgründen weggelassen ist, ist so niedrig gewählt, daß auch bei der höchsten in den Eingang A eingespeisten Frequenz an dem Ausgang Q kein Dauersignal entsteht. Am Ausgang Q wird auf diese Weise ein frequenzmodulierter Puls mit konstanter Amplitude erhalten, dessen Tastverhältnis sich mit der Eingangsfrequenz ändert, wobei der Gleichspannungsmittelwert der Drehzahl proportional ist.

In einem an dem Ausgang Q des Monoflops 36 angeschlossenen Butterworth-Tiefpaß 37 vierter Ordnung wird der aus dem Monoflop 36 kommende Puls in ein Gleichspannungssignal umgewandelt, dessen Amplitude der Frequenz an dem Eingang 5 bzw. A proportional ist.

Der Tiefpaß 37 besteht aus zwei hintereinandergeschalteten aktiven Filtern 38 und 39, die untereinander gleich aufgebaut, jedoch verschieden dimensioniert sind, weshalb es ausreicht, den Aufbau des Filters 38 zu beschreiben und das Filter 39 lediglich als Dreipol zu veranschaulichen.

Das Filter 38 enthält als aktives Schaltelement einen Differenzverstärker 41, dessen nichtinvertierende Eingang über die Serienschaltung aus zwei Widerständen 42 und 43 an den Ausgang Q des Monoflops 36 angeschlossen ist. Ferner liegt der nichtinvertierende Eingang des Differenzverstärkers 41 über einem Kondensator 44 an der Schaltungsmasse 45, mit der ebenfalls der Ausgang des Differenzverstärkers 41 über die Serienschaltung aus zwei Widerständen 46 und 47 verbunden ist. Die Verbindungsstelle zwischen den beiden Widerständen 46 und 47 liegt unmittelbar an dem invertierenden Eingang des Differenzverstärkers 41, so daß sich eine von dem Spannungsteilerverhältnis der Widerstände 46 und 47 bestimmte Gegenkopplung ergibt. Von dem Ausgang des Differenzverstärkers 41, der gleichzeitig auch den Ausgang des Filters 38 bildet, führt ein Kondensator 48 zu der Verbindungsstelle zwischen den beiden eingangsseitig angeordneten Widerständen 42 und 43, wodurch sich eine frequenzabhängige Mitkopplung ergibt. Die Dimensionierung und Wirkungsweise eines solchen aktiven Tiefpaßfilters 38 mit Einfachmitkopplung ist in U. Tietze, Ch. Schenk « Halbleiterschaltungstechnik » korrigierter Nachdruck der dritten Auflage, Seite 330, Springer Verlag, im einzelnen beschrieben.

Auch das Filter 39 enthält als aktives Element einen Differenzverstärker, dessen nichtinvertierender Eingang über zwei Widerstände entsprechend den Widerständen 42 und 43 an den Ausgang des Differenzverstärkers 41 angeschlossen ist, während der Ausgang des in den Filter 39 enthaltenen Differenzverstärkers auch den Ausgang dieses Filters und damit den Ausgang 6 des Frequenzspannungswandlers 4 bildet.

Beide Filter 38 und 39, die zusammen den Butterworth-Tiefpaß vierter Ordnung bilden, sind so dimensioniert, daß einerseits die Gleichspannung an dem Ausgang 6 der Drehzahländerung des Motors 2 folgen kann, daß aber andererseits Wechselspannungsreste aus der Impulskette des Monoflops 36 nahezu vollständig unterdrückt werden.

Die nachfolgende Differenziereinrichtung 8 enthält einen über eine Parallelschaltung aus einem Kondensator 49 und einem Widerstand 51 vom Ausgang zum invertierenden Eingang gegengekoppelten Differenzverstärker 52, dessen nichtinvertierender Eingang ebenfalls an die Schaltungsmasse 45 angeschlossen ist. Die Signaleinspeisung in den Differenzverstärker 52 erfolgt über eine Serienschaltung aus einem Kondensator 52 und einem Widerstand 53, die einenends an dem invertierenden Eingang des Differenzverstärkers 52 liegt und anderenends an den Ausgang 6 des Frequenzspannungswandlers 4 bzw. den Ausgang des Differenzverstärkers in dem Filter 39 angeschaltet ist. Wie eine solche Differenziereinrichtung zu bemessen ist, ist ab Seite 248 der oben angegebenen Literaturstelle beschrieben.

Auf die Differenziereinrichtung 8 folgt der Regler 13, der einen als addierenden Integrator oder Summationsintegrator beschalteten Differenzverstärker 54 enthält, der von seinem Ausgang, der den Ausgang 26 des Reglers bildet, über einen Kondensator 55 zu seinem invertierenden Eingang gegengekoppelt ist, während der nichtinvertierende Eingang über einen Widerstand 56 zur Kompensation der Offsetstromdrift an der Schaltungsmasse 45 liegt. An dem invertierenden Eingang des Differenzverstärkers 54 ist ein beweglicher Kontakt 57 eines Umschalters 58 angeschlossen, der beispielsweise durch einen elektronischen Analogschalter gebildet ist und über die Steuerleitung 34 gesteuert wird. Einer der beiden feststehenden Kontakte, nämlich der Kontakt 59, führt zu der Verbindungsstelle zweier in Serie geschalteter Widerstände 61 und 62, von denen der Widerstand 62 mit seinem freien Ende an dem Ausgang des Differenzverstärkers 54 liegt, während der Widerstand 61 mit seinem freien Anschluß an den negativen Pol einer nicht weiter veranschaulichten Konstantspannungsquelle angeschaltet ist. Auf diese Weise kann, wenn der invertierende Eingang des Differenzverstärkers 54 über den Umschalter 58 mit dem Spannungsteiler aus den Widerständen 61 und 62 verbunden ist, ein Anfangswert für den Integrator 25 eingestellt werden, wie dies oben beschrieben ist. In der anderen Stellung des Umschalters 58 ist der bewegliche Schaltkontakt 57 mit einem feststehenden Schaltkontakt 63 verbunden, der seinerseits an den beweglichen Schaltkontakt 23 des ebenfalls wieder als integrierten elektronischen Schalters ausgebildeten Umschalters 21 angeschlossen ist. Dessen feststehender Kontakt 22 führt über einen Widerstand 64 zur Schaltungsmasse, während der andere feststehende Kontakt 65 an dem Verbindungsknoten 19 liegt, der den Ausgang des Addierers 18 bei dem Blockschaltbild nach Fig. 1 bildet. Der Addierer 18 enthält bei der Schaltung nach Fig. 2 zwei Widerstände 66 und 67, von denen der Widerstand 66 zwischen dem Ausgang 9 der Differenziereinrichtung 8 und dem Schaltungsknoten 19 und der Widerstand 67 zwischen dem Schaltungsknoten 19 und dem Ausgang 16 der Sample- and Holdeinrichtung 14 liegt.

Das aus dem Ausgang 26 kommende Spannungssignal ist die Stellgröße für die nachfolgende Phasenanschnittsteuerung 3, die, wie oben dargelegt, als aktives Element eine integrierte Schaltung vom Typ TCA 780 enthält, wobei jedoch das aus dem Regler 13 erhaltene Signal vor dem Einspeisen in die integrierte Schaltung TCA 780 über einen Subtrahierer geführt wird, in dem die Ausgangsspannung des Reglers 13 bzw. Integrators 25 von einem Maximalwert abgezogen wird, da die integrierte Schaltung TCA 780 an ihrem Pin 11 zur Steuerung ein Signal mit umgekehrter Phasenlage benötigt, wie es der Integrator 25 an seinem Ausgang 26 abgibt.

Die an den Ausgang des Frequenzspannungswandlers 4 angeschlossene Sample- and Holdeinrichtung 14 wird von zwei Differenzverstärkern 68 und 69 gebildet. Hierbei ist der Differenzverstärker 69 als Inverter mit der Verstärkung 1 und hohem Eingangswiderstand geschaltet, d. h. der Ausgang des Differenzverstärkers 69 liegt unmittelbar an dem invertierenden Eingang, während der Differenzverstärker 68 über einen Widerstand 71 zu seinem invertierenden Eingang gegengekoppelt ist, so daß sich eine vorbestimmte Spannungsverstärkung durch den Differenzverstärker 68 ergibt. Der Widerstand 71 liegt hierzu einenends an dem invertierenden Eingang des Differenzverstärkers 68 und anderenends an dem invertierenden Eingang des Differenzverstärkers 69 bzw. an dem Ausgang 16 der Sample- and Holdeinrichtung 14. Von dem invertierenden Eingang des Differenzverstärkers 68 führt ferner ein Widerstand 72 zu dem Eingang 15 der Sample- and Holdeinrichtung 14, wohingegen der nichtinvertierende Eingang des Differenzverstärkers 68 über einen Widerstand 73 zur Kompensation der Offsetstromdrift an der Schaltungsmasse liegt. Der Ausgang des Differenzverstärkers 68 ist an einen gesteuerten elektronischen Schalter 74 angeschlossen, über den wahlweise eine elektrische Verbindung mit dem nichtinvertierenden Eingang des Differenzverstärkers 69 hergestellt werden kann, dessen nichtinvertierender Eingang über eine Serienschaltung aus einem Kondensator 75 und einem Widerstand 76 an der Schaltungsmasse 45 liegt. Der Widerstand 76 dient sowohl der Driftkompensation als auch der Festlegung der Zeitkonstanten, mit der der Kondensator 75, der als Speicherelement der Sample- and Holdeinrichtung 14 dient, aus dem Ausgang des Differenzverstärkers 68 aufgeladen wird.

Die Einrichtung 31, mit der eine vorgegebene Minimaldrehzahl des Motors 2 erkannt wird, unterhalb der möglicherweise Fehlsteuerungen durch die Differenzierung und nachfolgende Integration auftreten können, enthält zwei hintereinandergeschaltete retriggerbare Monoflops 78 und 79, deren Cleareingänge CL parallelgeschaltet sind. Das an dem Eingang 5 des Frequenzspannungswandlers 4 abgegriffene Frequenzsignal gelangt in einen Eingang A des Monoflops 78, dessen Zeitkonstante gleich dem Impulsabstand zweier benachbarter Impulse des Frequenzsignals bei der vorgegebenen Minimaldrehzahl des Motors 2 ist, wie es in den Eingang 5 eingespeist wird. Zur Verwirklichung der monostabilen Charakteristik ist in bekannter Weise der Ausgang $\bar{Q}$ des Monoflops 78 zu dem Eingang $\bar{B}$ gegengekoppelt; die notwendige Kapazität ist aus Darstellungsgründen weggelassen. Der Ausgang $\bar{Q}$ des Monoflops 78 liegt an einem Eingang A des Monoflops 79, das wiederum ebenfalls von seinem Ausgang $\bar{Q}$ in bekannter Weise zu einem Eingang $\bar{B}$ gegengekoppelt ist. Auch hierbei wurde, wie bei den weiteren, noch zu beschreibenden Monoflops, die zeitbestimmende Kapazität nicht mitgezeichnet.

Die Steuerung des Funktionsablaufes der Schaltungsanordnung 1 erfolgt mittels eines nach H gehenden Impulses, der an einer Leitung 87 eingespeist wird. Die Leitung 87 führt einerseits zu dem Steuereingang 34 des Integrators 25 und andererseits zu einem Eingang A eines Monoflops 80, dessen Ausgang $\bar{Q}$ einerseits zu dem Eingang $\bar{B}$ zurückgekoppelt ist und andererseits an einem Eingang A eines Monoflops 81 liegt. Das wiederum von seinem Ausgang $\bar{Q}$ zu dem Eingang $\bar{B}$ gegengekoppelte Monoflop 81 liegt außerdem über seinen Ausgang $\bar{Q}$ an dem Steuereingang 17 der Sample- and Holdeinrichtung 14. Ein NAND-Gatter 82 mit zwei Eingängen liegt mit einem seiner Eingänge an dem Eingang A des Monoflops 81 und andererseits an dem Eingang $\bar{B}$ desselben Monoflops, während sein Ausgang über einen Inverter 83 an einem Eingang eines NAND-gatters 84 liegt, dessen Ausgang an dem Steuereingang 30 des Umschalters 21 angeschlossen ist, während der andere Eingang des NAND-Gatters 84 von dem Ausgang $\bar{Q}$ des Monoflops 79 beaufschlagt ist.

Um Fehlsteuerungen, beispielsweise ein Wiedereinschalten des Motors vor Ende der Bremsphase zu verhindern, kann noch ein weiteres, ebenfalls positiv flankengetriggertes Monoflop 85 vorgesehen sein, das mit seinem Eingang A an den Ausgang $\bar{Q}$ des Monoflops 79 angeschlossen ist und über seinen Ausgang $\bar{Q}$ einen kurzen Impuls abgibt, der das Ende des Bremszyklus signalisiert. Auch hierbei ist wiederum der Cleareingang CL wie derjenige der beiden Monoflops 78 und 79 an den Ausgang $\bar{Q}$ des Monoflops 80 angeschlossen.

Die Arbeitsweise der insoweit beschriebenen Schaltungsanordnung nach Fig. 2 ist nunmehr unter Hinzunahme des Schaltwellendiagramms nach Fig. 3 beschrieben, wobei die links angegebenen Bezugszeichen dasjenige Bauelement bzw. diejenige Leitung kennzeichnen das das veranschaulichte Signal abgibt bzw. auf der das Signal auftritt.

Zum Zeitpunkt $T_0$ wird der Motor 2 mittels einer bekannten Steuereinrichtung vom Netz abgetrennt und der Motorbetrieb beendet. Nach einer Sicherheitszeit, die bis zum Zeitpunkt T· reicht und in der das vollständige umschalten der Relais abgewartet wird, gibt diese Steuerung ein Spannungssignal ab, so daß das Potential auf der Leitung 87 von L nach H angehoben wird. Diese positive Flanke triggert das Monoflop 80, dessen Ausgangspotential von H nach L geht und bis zum Zeitpunkt $T_2$ auf L bleibt. Durch diesen an dem Ausgang $\bar{Q}$ des Monoflops 80 erhaltenen Impuls werden die Monoflops 78, 79 und 85 über ihren Cleareingang CL zurückgesetzt. Der nächste, nach dem Verschwinden des Clearimpulses eintreffende Impuls von der Leitung 5 triggert das retriggerbare Monoflop 78, das daraufhin an seinem Ausgang $\bar{Q}$ von H nach L geht. Diesen Zustand hält es so lange bei, bis der Abstand zwischen zwei benachbarten Impulsen an dem Eingang A größer ist als die Zeitkonstante des Monoflops 78, was das Erreichen einer vorgegebenen Mindestdrehzahl zum Zeitpunkt $T_4$ angibt.

Da das Monoflop 79 positiv flankengetriggert ist, wird durch den Potentialwechsel am Ausgang $\bar{Q}$ des Monoflops 78 von H nach L das Monoflop 79 nicht getriggert, sondern es behält an seinem Ausgang $\bar{Q}$ das H-Potential bei.

Durch den Potentialwechsel auf der Leitung 87 wird außerdem der Integrator 25 über den Steuereingang 34 umgeschaltet und über eine weitere, nicht veranschaulichte Leitung, die Phasenanschnittsteuerung 3 aktiviert, die nunmehr das von dem Regler 13 abgegebene Spannungssignal nach der Subtraktion von einem Maximalwert in einen Phasenanschnittwinkel für die Steuerung des Thyristors umsetzt. Vor dem Zeitpunkt T· war nämlich der bewegliche Schaltkontakt 57 mit dem Anschluß 59 verbunden, so daß der Integrationskondensator 55 des Integrators 25 auf eine dem Spannungsabfall an dem Widerstand 62 entsprechende Gleichspannung aufgeladen gehalten wurde. Diese Gleichspannung entspricht etwa der mittleren Gleichspannung an dem Kondensator 55 während des normalen Bremsbetriebes. Es wird auf diese Weise erreicht, daß die Phasenanschnittsteuerung 3 sogleich nach ihrer Aktivierung durch die positive Flanke auf der Leitung 87 mit etwa dem richtigen Phasenwinkel zu bremsen beginnt.

Abgesehen von dem Rücksetzen der Monoflops 78, 79 und 85 bewirkt der aus dem Monoflop 80 kommende und von $T_1$ bis $T_2$ dauernde Impuls des Monoflops 80 durch seine positive Flanke zum Zeitpunkt $T_2$ ein Umkippen des Monoflops 81, das daraufhin an seinem Ausgang von H nach L wechselt. Solange der Ausgang $\bar{Q}$ des Monoflops 81 in dem Zeitintervall $T_2$ bis $T_3$ L ist, ist der Schalter 74 geschlossen und der Speicherkondensator 75 kann sich auf die an dem Ausgang des Differenzverstärkers 68 anstehende Spannung aufladen. Diese Spannung ist um den Verstärkungsfaktor des über die Widerstände 71 bzw. 72 gegengekoppelten Differenzverstärkers 68 größer als die an dem Ausgang 6 anstehende Spannung, die auf diese Weise eine Bewertung erfährt, wodurch erreicht wird, daß mit sinkender Motordrehzahl bei Bremsbeginn auch ein entsprechend kleinerer Sollwert an dem Eingang 12 vorgegeben wird, der eine entsprechend langsamere Abbremsung des Motors 2 bewirkt, damit die gesamte Bremszeit vom Beginn des Bremszyklus bis zum Stillstand des Motors 2 konstant gehalten wird. Nach dem Abklingen des Impulses des Monoflops 81, wenn also der Ausgang $\bar{Q}$ wieder von L nach H wechselt, wird der Schalter 74 geöffnet, womit für den Rest des Bremszyklus der anfangs in dem Kondensator 75 gespeicherte Spannungswert an dem Eingang 12 als Führungsgröße zur Verfügung steht, weshalb die Spannung an dem Kondensator 75 hochohmig über den nichtinvertierenden Eingang des bis zum Verstärkungsfaktor 1 gegengekoppelten Differenzverstärkers 69 abgegriffen wird.

Solange einer der beiden Ausgänge $\bar{Q}$ der Monoflops 80 bzw. 81 auf L-Potential ist, bleibt auch der Ausgang des NAND-Gatters 82 auf H. Erst, wenn beide Ausgänge $\bar{Q}$ der Monoflops 80 und 81 gleichzeitig auf H sind, geht das Potential am Ausgang des NAND-Gatters 82 auf L und somit das Potential am Ausgang des Inverters 83, das das Eingangssignal für das NAND-gatter 84 bildet, auf H. Da beide Eingänge des NAND-Gatters 84 erst am Zeitpunkt $T_3$ auf H-Potential liegen — das Monoflop 79 ist noch nicht getriggert und die Impulse der Monoflops 80 und 81 sind abgeklungen — geht der Ausgang des NAND-Gatters 84 von H nach L, was den Umschalter 21 in die in Fig. 2 gezeigte Stellung umschaltet, in der der Kontakt 15 mit dem Kontakt 23 verbunden ist.

Nunmehr hat die normale Regelphase begonnen, d. h. die an dem Ausgang 6 des Frequenzspannungsumsetzers 4 anstehende und mit der Zeit allmählich abklingende Spannung wird in der nachfolgenden Differenziereinrichtung differenziert und dem Eingang 11 des Reglers 13 zugeführt, der an seinem Eingang 12 die aus der Sample- and Holdeinrichtung 14 erhaltene Führungsgröße von der Regelgröße an dem Eingang 11 abzieht. Der Differenzwert der beiden Größen wird in dem nachfolgenden Integrator 25 aufintegriert. Auf diese Weise wird erreicht, daß der Motor 2 unabhängig von seinem jeweiligen Schwungmoment und der Anfangsdrehzahl zu Beginn der Bremsung innerhalb einer festgelegten Zeit zum Stillstand kommt. Dies wird dadurch erreicht, daß über die Sample- and Holdeinrichtung 14, die mit der Bewertungseinrichtung, gebildet aus dem Differenzverstärker 68, verbunden ist, ein von der Anfangsdrehzahl abhängiger Sollwert für die Drehzahländerung, d. h. die Amplitude der Spannung an dem Ausgang 9 der Differenziereinrichtung 8 gebildet wird.

Wenn nach dem Erreichen der Minimaldrehzahl der Abstand zwischen zwei benachbarten Impulsen an dem Eingang 32 des Monoflops 78 kürzer wird als die Triggerzeit des Monoflops 78, kippt es in den Ausgangszustand mit H am Ausgang $\bar{Q}$ zurück, so daß durch die erste positive Flanke dieser Art das Monoflop 79 zum Zeitpunkt $T_4$ umgeschaltet wird. Als Folge hiervon wechselt der Ausgang des NAND-Gatters 84 nach H, was den Umschalter 21 in die andere der gezeichneten Lagen umschaltet, so daß der Eingang des Integrators 25 über den Widerstand 64 geerdet wird. Durch diese Umschaltung wird bewirkt, daß die Ausgangsspannung an dem Ausgang 26 unabhängig von Änderungen der Regelgröße an dem Eingang 11 konstant gehalten wird und daß die Phasenanschnittsteuerung 3 den Motor 2 mit dem zuletzt eingestellten Phasenanschnittwinkel bis zum Stillstand abbremst. Dieser Zustand wird zwischen den Zeitpunkten $T_4$ und $T_5$ erreicht, denn die Zeitkonstante des Monoflops 79 ist so gewählt, daß es erst innerhalb einer vorbestimmten Sicherheitszeit nach dem Ausbleiben des letzten Impulses des Monoflops 78 in den Ausgangszustand zurückkippt, was den Schalter 21 wieder in die gezeichnete Lage zurückbringt. Die positive Impulsflanke an dem Ausgang $\bar{Q}$ des Monoflops 79 triggert das Monoflop 85, das zum Zeitpunkt $T_5$ einen kurzen Impuls an seinem Ausgang $\bar{Q}$ abgibt, wodurch für die übrigen Schaltungsteile, die an diesem Ausgang angeschlossen sind, erkennbar ist, daß der Bremsvorgang nunmehr beendet ist.

Das in Fig. 1 veranschaulichte Blockschaltbild der Schaltungsanordnung 1 läßt sich nicht nur, wie in Fig. 2 gezeigt, auf analoge Weise verwirklichen, sondern kann auch mittels eines Mikrocomputers 100 realisiert werden, wie er in Fig. 4 gezeigt ist.

Bei dem veranschaulichten Mikrocomputer handelt es sich um einen 8-Bit-Ein-Chip-Mikrocomputer vom Typ SAB 80315 der Firma Siemens ; die genaue Funktionsbeschreibung ist in der entsprechenden Spezifikation der Firma Siemens offenbart. Im einzelnen wird auf die Funktion des Mikrocomputers 100 nur so weit eingegangen, wie es für das Verständnis der Erfindung erforderlich ist.

Das der Drehzahl des Motors 2 proportionale Frequenzsignal wird dem Eingang 5 an zwei Klemmen 101 und 102 zugeführt. Mit den beiden Klemmen 101 und 102 sind die Elektroden einer Leuchtdiode 103 eines einen Fototransistor 104 enthaltenen Optokopplers 105 verbunden. Der Fototransistor 104 liegt emitterseitig an der Schaltungsmasse 45, an der auch der Stromversorgungseingang $V_{SS}$ des Mikrocomputers 100 angeschlossen ist. Der Kollektor des Fototransistors 104 führt hingegen über einen Widerstand 106 zu einer positiven Versorgungsspannung 107, die in einen Stromversorgungsanschluß $V_{CC}$ des Mikrocomputers 100 eingespeist wird. An den Kollektor des Fototransistors 104 ist außerdem ein Monoflop 108 mit seinem Eingang B angeschlossen, dessen Ausgang Q mit einem Eingang Cl2 des Mikrocomputers 100 in Verbindung steht. Auf diese Weise werden die über den Optokoppler 105 ankommenden und verschliffenen Impulse mit Hilfe des Monoflops 108 flankenversteilert und dem Mikrocomputer 100 zugeführt, mit dessen Eingang Cl2 intern das Tor für einen mehrstufigen Zähler verbunden ist, der über die Register des Mikrocomputers 100 steuerbar ist, und intern während der Torzeit mit rechnerinternen Taktsignalen hochgezählt wird.

Die Eingabe von Daten erfolgt über einen Kreuzschienenverteiler oder Matrix 109, dessen Spaltenleitungen 111 jeweils an einen zugehörigen Eingangsanschluß 10 bis 14 angeschlossen ist, während seine Zeilenleitungen 112 mit jeweils einem zugehörigen Eingang Mux0 bis Mux3 in Verbindung steht. An jedem Kreuzungspunkt zwischen Zeilen- und Spaltenleitung 111 und 112 kann ein Schalter oder Taster angeordnet sein, wobei lediglich die Taster 113 und 114 veranschaulicht sind. In Serie mit jedem der Schalter liegt eine Diode 115, die dazu dient, die einzelnen Schalter 113, 114 voneinander in bekannter Weise zu entkoppeln. Die übrigen möglichen Verknüpfungen sind durch gestrichelt gezeichnete Dioden 116, jedoch ohne die zugehörigen Datenschalter schematisch veranschaulicht.

Ein weiterer Eingang, über den der Mikrocomputer 100 mit Information versorgt wird, stellt der Port P1O dar, an den der Kollektor eines Transistors 117 angeschlossen ist, dessen Emitter an der Schaltungsmasse 45 liegt. Die Basis des Transistors 117 führt über einen Widerstand 118 an einen Ausgang eines Differenzverstärkers 119, dessen beide Eingänge, nämlich der invertierende und der nichtinvertierende, über zwei antiparallelgeschaltete Dioden 121 und 122 miteinander verbunden sind. Der invertierende Eingang des Differenzverstärkers 119 ist geerdet, während der nichtinvertierende Eingang des Differenzverstärkers 119 über einen Vorwiderstand 123 an derjenigen Phase des nicht weiter gezeigten Wechselspannungsnetzes angeschlossen ist, an der auch die Phasenanschnittsteuerung zur Erzeugung des Bremsgleichstroms für den Motor 2 angeklemmt ist. Hierdurch entsteht an dem Ausgang des Differenzverstärkers 119 eine Rechteckspannung, die mit der Netzwechselspannung synchron ist und über den Transistor 117 dem Port P10 des Mikrocomputers 100 zugeführt wird.

Über Ports P11, P12 und P13 gibt der Mikrocomputer 100 Steuersignale an die äußere Schaltung, beispielsweise den Motorschütz, den Bremsschütz und den Thyristor der Phasenanschnittsteuerung ab. Im einzelnen liegt hierzu an dem Port P11 über einen Widerstand 124 die Basis eines Transistors 125, dessen Emitter mit einer positiven Spannung von dem Anschluß 107 versorgt wird. Der Kollektor hingegen ist mit einem Eingangsanschluß 126 eines Optokopplers 127 verbunden, dessen anderer Anschluß 127a über einen Widerstand 128 geerdet ist. Der Optokoppler 127 gibt an seinem nicht gezeigten Ausgang Zündimpulse für den Thyristor in der Phasenanschnittsteuerung 3 ab. Der Port P12 dient zur Steuerung des Motorschütz, wozu an dem Port P12 über einen Widerstand 129 die Basis eines Transistors 131 angeschlossen ist, dessen Emitter an der positiven Spannung des Anschlusses 107 liegt, während der Kollektor mit einer Eingangsklemme 132 eines Solidstaterelais 133 verbunden ist, dessen anderer Eingangsklemme 134 an der Schaltungsmasse liegt. Die nicht weiter gezeigte Ausgangsseite des Solidstaterelais 133 steuert von der Eingangsseite galvanisch getrennt einen Motorschütz, mit dem der Motor 2 an die Netzwechselspannung angeschlossen ist.

Der Port P13 steuert hingegen das Bremsschütz über das die Stränge des Motors 2 an den Gleichstromausgang der Phasenanschnittsteuerung 3 angeschaltet werden. Die Beschaltung des ports P13 entspricht der Beschaltung des Ports P12, weshalb insoweit eine erneute Beschreibung unnötig ist.

Zur Steuerung des Systemtaktes des Mikrocomputers 100 auf ca. 3 MHz ist an Anschlüsse X1 und X2 ein Schwingquartz 135 angeschlossen, der durch einen parallelgeschalteten Widerstand 136 bedämpft ist.

Über einen Anschluß $V_{DD}$ wird schließlich die Versorgungsspannung für den Ruhestrom zugeführt.

Das Flußdiagramm für ein geeignetes Programm für den Mikrocomputer 100 ist in Fig. 5 veranschaulicht. Nach dem Einschalten der Stromversorgung bei 140 durchläuft der Mikrocomputer 100 eine interne Initialisierungsphase, wobei der Programm- bzw. Befehlsfolgezähler auf den Startwert für das Anfangsladeprogramm gesetzt wird. Hiernach beginnt bei 141 die Programminitialisierungsphase, bei der die Steuer- und Statusregister entsprechend den in dem RAM- oder ROM-Speicher des Mikrocomputers 100 vorgegebenen Daten gesetzt werden. Ferner werden gegebenenfalls Daten aus dem ROM in den RAM übertragen. Sobald dies geschehen ist, werden durch das Programm bei 142 die Ports initialisiert und die Ausgabewerte auf den jeweiligen Startwert, im vorliegenden Fall H, gesetzt. Ferner wird der Anfangswert für den Zündwinkel des über den Port P11 gesteuerten Thyristors geladen, und zwar als Zeit gemessen ab der positiven Flanke, wie sie über den Port P10 durch den Mikrocomputer 100 gemessen werden kann. Ferner bestimmt das Programm an dieser Stelle die Grenzwerte, innerhalb der die Zündverzögerungszeit des Thyristors eingestellt werden kann, und zwar wiederum bezogen auf die positive Flanke der Netzwechselspannung, die über den Differenzverstärker 119 und den Port P10 gemessen wird. Schließlich wird ein interner Wert für die maximale Bremsdauer aus dem ROM geladen, die gegebenenfalls später durch eine Eingabe über die Schalterstellung am Kreuzschienenverteiler 109 überschrieben werden kann.

Bei 143 wird dann das Eingaberegister über die Multiplex-Eingänge Mux0 bis Mux1 gelesen, d. h. die mit diesen Multiplexer-Eingängen in Verbindung stehenden Kodierschalter sowie der Schalter 114, der dem Mikrocomputer 100 das Einschalten des Motorschütz signalisiert. Die übrigen mit den Multiplexer-Eingängen Mux0 und Mux1 verbundenen, in Fig. 4 nicht weiter gezeichneten Schalter, stellen eine dezimale Angabe der Bremszeit dar. Es wird nun bei 144 überprüft, ob der EIN-Schalter 114 geschlossen ist ; falls nein, kehrt das Programm zu dem Anfang des Anweisungsblocks 143 zurück, andernfalls fährt es mit dem Anweisungsblock 145 fort, in dem das Programm das Ausgangspotential des ports P12 von H nach L umschaltet. Nunmehr wird bei 146 die uber die Multiplexer-Eingänge 0 und 1 gelesene Bremszeit in eine in dem Mikrocomputer 100 leichter weiter verarbeitbare binäre Form umgerechnet und abgespeichert, wobei der aus dem ROM gelesene Startwert für die Bremszeit durch die aktuelle Eingabe überschrieben wird. Hieran anschließend werden jetzt die Multiplexer-Eingänge Mux2 und Mux3 gelesen, wozu u. a. auch der Schalter 113 gehört. Der Schalter 113 teilt dem Mikrocomputer 100 mit, ob der Bremszyklus durch Betätigen des Bremsrelais eingeleitet werden soll. Die übrigen, an den Multiplexer-Eingängen 2 und 3 hängenden Schalter definieren die von dem Benutzer jeweils gewünschten und frei eingebbaren Werte für die Zündverzögerung, d. h. den Zündwinkel des Thyristors für den Bremsgleichstrom. Falls die AUS-Taste 113 betätigt ist, was an der Programmstelle 148 überprüft wird, wird mit dem Anweisungsblock 149 fortgefahren, andernfalls kehrt das Programm zu dem Anfang des Anweisungsblocks 147 zurück und beginnt mit einem neuen Ablesen der Multiplexer-Eingänge Mux2 und Mux3.

Ist hingegen die AUS-Taste 113 betätigt, wird das Motorschütz abgeschaltet, d. h. das Potential am Port P12 geht von L nach H. Hiernach wird bei 150 die von den Multiplexer-Eingängen Mux2 und Mux3 abgelesenen Anfangswerte für die Zündverzögerung des Thyristors umgerechnet und abgespeichert.

Bei 150 wird überprüft, ob der Anfangswert für die Zündverzögerung, der über die Schalter in den Mikrocomputer 100 eingegeben wurde, kleiner ist als der im Programm fest vorgegebene Minimalwert, oder ob, wie bei 152 festgestellt wird, der Anfangswert, um den zunächst der Thyristor verzögert gegenüber der positiven Flanke getriggert wird, größer ist als der im Programm vorhandene Maximalwert $T_{max}$. Wenn sich der Anfangswert für die Zündverzögerung innerhalb der beiden genannten Grenzen befindet, geht der Mikrocomputer für 300 msec in eine Warteschleife, die bei 153 angegeben ist. Andernfalls wird, je nach dem, ob die Grenzen über- oder unterschritten werden, für den Anfangswert entweder der Minimal- oder der Maximalwert verwendet, d. h. es erfolgt eine entsprechende Wertzuweisung an eine Variable $T_{Anf}$.

Nachdem 300 msec abgewartet sind, die dazu dienen, das Abklingen eventuellen Kontaktprellens u. dgl. des Motorschütz bzw. von Induktionsspannungen abzuwarten, wird bei 154 der Bremsschütz aktiviert, indem der Port P13 auf L-Potential gelegt wird. Nach einer erneuten Warteschleife von 300 msec bei 155, die ebenfalls dazu dient, das Abklingen mechanischer Schwingungen in dem Bremsschütz abzuwarten, wird auf die nächste negative Flanke am Port P10, d. h. die nächste negative Flanke der Netzwechselspannung gewartet. Erst, wenn der Port P10 das Eintreffen der negativen Flanke signalisiert hat, beginnt das Programm des Mikrocomputers 100 auf die nun eintreffende positive Flanke der Netzwechselspannung zu warten, was bei 157 erfolgt, um so eine eindeutige Synchronisation mit dem Beginn der positiven Halbwelle der Netzwechselspannung zu erreichen. Nachdem die positive Flanke eingetroffen ist, geht das Programm aus der Warteschleife bei 157 zu einer Warteschleife 158 über, in der nunmehr das Programm entsprechend der Zündverzögerungszeit für den Thyristor, nämlich $T_{Anf}$ angehalten wird. Nach Ablauf der Zeit wird über den Port P11, der hierzu kurzzeitig nach L geht, der Zündimpuls für den Thyristor ausgegeben. Es erfolgt damit ein erster Bremsgleichstromimpuls für den Motor 2, der gegebenenfalls dazu notwendig ist, die im Bremsbetrieb wirksame Drehzahlerfassung zu aktivieren, wenn die Erzeugung des der Motordrehzahl proportionalen Signals, wie in der Patentanmeldung P 33 39 299.4 beschrieben, erfolgt. Da das Ausgeben des Zündimpulses für den Thyristor schneller geht als die zu diesem Zeitpunkt noch anstehende positive Halbwelle der Netzwechselspannung, geht das Programm des Mikrocomputers bei 159 in eine weitere Warteschleife und wartet das Ende der positiven Halbwelle, d. h. die nächste ankommende negative Flanke ab. Nachdem dieses Ereignis eingetroffen ist, wird der interne Zähler, der über CI2 mit Zählimpulsen entsprechend der Drehzahl des Motors beaufschlagt wird, bei 160 auf 0 gesetzt. Es beginnt hiermit die Drehzahlmessung, die sich jeweils über fünf volle Netzschwingungen erstreckt, da in einem nachfolgenden Anweisungsblock 161 ein Register R2, das als Schleifenzähler dient, auf 5 gesetzt wird. Hierdurch wird festgelegt, daß die nachfolgend dargestellte Programmschleife insgesamt fünf Mal durchlaufen wird. Die nachfolgende Programmschleife enthält wiederum drei aufeinanderfolgende Wartezyklen, wobei zunächst bei 162 auf die negative Flanke, dann bei 163 auf die positive Flanke und schließlich nach dem Eintreffen der positiven Flanke bei 164 die Zündverzögerungszeit für den Thyristor, gemessen ab dem Beginn der positiven Halbwelle, abgewartet wird. Im Anweisungsblock 164 wird, wie vorher beim Anweisungsblock 158, über den Port P11 der Zündimpuls für den Thyristor ausgegeben. Anschließend wird in einem Anweisungsblock 165 das Register R2 um 1 verringert. Wurde die Schleife aus den Anweisungsblöcken 162 bis 165 insgesamt fünf Mal durchlaufen, dann ist das Register R2 bis auf 0 zurückgezählt, was bei 166 überprüft wird. Ist die Bedingung erfüllt, wird mit einem Anweisungsblock 167 fortgefahren, andernfalls erfolgt ein Rücksprung an den Anfang des Anweisungsblocks 162.

Der Anweisungsblock 167 enthält eine Warteschleife auf die negative Flanke und somit auf das Ende der positiven Netzhalbwelle, so daß bei einem Anweisungsblock 168 der über den Eingang CI2 das der Motordrehzahl proportionale Frequenzsignal erhält, abgelesen und auf 0 gesetzt. Da diese Ablesung des internen Zählers nach exakt fünf vollen Netzschwingungen erfolgte, ist der Zählerstand ein unmittelbares Maß für die mittlere Motordrehzahl, d. h. der Zählerstand nach dem Eintreffen der negativen Flanke bei 167 ist der Motordrehzahl proportional. Nachfolgend wird nunmehr bei 169 aus den eingegebenen Daten oder den im Programm bereits vorhandenen Daten der Sollwert für die Drehzahländerung berechnet und entsprechend abgespeichert. Nach dieser ersten Meßphase, die bei dem Warten auf die negative Flanke bei dem Anweisungsblock 159 begonnen hat und die an ihrem Ende einen Anfangswert für die Motordrehzahl geliefert hat, beginnt mit einem Anweisungsblock 170 ein weiterer Meßzyklus, um festzustellen, wie stark die Abbremsung des Motors ist, wenn weitere fünf Netzhalbwellen lang der Thyristor mit einem der Zeit $T_{Anf}$ entsprechenden Zündwinkel getriggert wird. Es wird hierzu bei 170 das Register R2 wieder auf 5 gesetzt und dann eine Schleife bestehend aus Wartezyklen 171, 172 und 173 gestartet, bei denen zunächst auf die negative Flanke, dann auf die positive Flanke und schließlich den Ablauf der Zündverzögerungszeit $T_{Anf}$ gewartet wird, ehe bei 173 ein weiterer Zündimpuls für den Thyristor über den Port P11 ausgegeben wird. Nach der Ausgabe des Zündimpulses wird das Register R2 um 1 zurückgesetzt, was bei 174 angegeben ist. Wenn die daran anschließende Abprüfung des Inhalts von R2 bei 175 negativ ist, erfolgt ein Rücksprung an den Anfang der Anweisung bzw. Warteschleife 171, andernfalls läuft das Programm zu einer Anweisungsstelle 176 weiter, an der wiederum der Zähler abgelesen und 0 gesetzt wird. Entspricht der so erhaltene Zählerstand dem vorher berechneten Wert, den der Zähler nach fünf vollen Netzschwingungen bei der Minimaldrehzahl höchstens erreicht haben würde, dann wird, wie über den Konektor 5 angegeben, der Restbremszylklus eingeleitet, andernfalls geht nach der Bedingungsabprüfung bei 177 das Programm zu einer Prüfanweisung 178 weiter, bei der überprüft wird, ob der Sollwert für die Drehzahlabnahme über einem vorgegebenen Minimalwert liegt. Falls nein, erfolgt ein Rücksprung zu der Anweisung 170 und es erfolgt die Fortsetzung der Bremsung über weitere fünf Netzzyklen mit dem Anfangswert für die Zündverzögerung bzw. den Zündwinkel des Thyristors. Ist der Wert hingegen gültig, dann wird in einem Anweisungsblock 179 nunmehr die Drehzahländerung als Differenz zwischen dem alten und dem neuen Zählerstand ermittelt und dieser Wert entsprechend abgespeichert. Gleichzeitig wird, was bei 179 nicht angegeben ist, der alte Zählerstand in der entsprechenden Speicherzelle durch den neuen Zählerstand überschrieben. Anschließend wird der Fehler berechnet als Differenz zwischen der gemessenen Drehzahländerung und dem Sollwert und als Fehlerwert abgespeichert. Hieraus ergibt sich die Änderung der Zündverzögerung, indem der gemessene Fehlerwert mit einer Konstanten K1, die kleiner als 1 ist, multipliziert wird, wodurch sich eine proportional-integrale Regelcharakteristik ergibt. Die neue Zündverzögerung, vorher mit $T_{Anf}$ bezeichnet, berechnet sich nunmehr aus der ursprünglichen Zündverzögerung, d. h. beim ersten Durchlauf aus dem Anfangswert $T_{Anf}$ zuzüglich der Änderung der Zündverzögerung. Diese Summe wird dann bei der Speicheradresse abgelegt, die vorher den Wert für $T_{Anf}$ adressierte bzw. bei einem erneuten Schleifendurchlauf den vorhergehenden Zündverzögerungswert adressierte.

Im Anschluß daran erfolgt ein unbedingter Rücksprung zu dem Anfang des Anweisungsblockes 170, womit eine weitere Brems- und Meßphase, die fünf volle Netzschwingungen lang ist, durchlaufen wird. Dieser Rücksprung ist bei 180 angegeben.

Der Schleifendurchlauf zwischen den Anweisungsblöcken 170 bis 180 erfolgt so lange, bis die Grenzdrehzahl erreicht ist, was bei der Prüfanweisung 177 festgestellt wird. Beim Erreichen dieser Bedingung wird die Schleife verlassen und eine Anweisung eines Anweisungsblocks 181 angesprungen, in der das Register R2, das als Schleifendurchlaufzähler dient, auf 100 gesetzt wird. Dies bedeutet, daß die nun folgende Schleife, bestehend aus Wartezyklen 182 auf die negative Flanke, aus Wartezyklen 183 auf die positive Flanke sowie Wartezyklen 184, mit denen das Ende der Zündverzögerung abgewartet wird, durchlaufen wird. In dem Block 184 erfolgt nach dem Ablaufen der Zündverzögerungszeit das Ausgeben des Zündimpulses über den Port P11 und damit das Triggern des Thyristors der Phasenanschnittsteuerung 3. Anschließend wird bei 185 das Register R2 um 1 zurückgesetzt. Dieser Schleifendurchlauf durch die Anweisung 181 bis 185 erfolgt so lange, bis das Register 2 wieder den Wert 0 enthält. Daran anschließend, was durch eine Prüfanweisung 186 festgestellt wird, werden noch 500 msec bei einer Anweisung 187 abgewartet, ehe das Programm in dem Mikrocomputer an die Stelle 10 nach dem Einschalten der Stromversorgung, d. h. dem Anfang des Anweisungsblocks 141 zurückkehrt.

## Patentansprüche

1. Verfahren zum Bremsen eines mit einer Bremseinrichtung versehenen Motors, bei dem die Drehzahl des Motors gemessen und in Abhängigkeit von einer vorgegebenen Sollwertkurve geregelt wird, dadurch gekennzeichnet, daß aus dem gemessenen zeitlichen Verlauf der Drehzahl deren Differentialquotient nach der Zeit gebildet wird, und der so erhaltene Istwert mit einem Sollwert, der proportional der Motorausgangsdrehzahl bei Bremsbeginn gewählt wird, verglichen wird.

2. Schaltungsanordnung zur Durchführung des Verfahrens nach Anspruch 1, mit einer die Drehzahl des Motors messenden und daraus ein proportionales Signal ableitenden Drehzahlmeßeinrichtung (4, 168, 179), deren Ausgänge mit einem Eingang (11) eines Reglers (13, 179) verbunden sind, dessen anderer Eingang (12) mit einem Sollwert beaufschlagt ist und der entsprechend der Differenz zwischen den beiden zugeführten Werten ein Signal für ein nachgeschaltetes Stellglied in der Bremseinrichtung (3) erzeugt, dadurch gekennzeichnet, daß zwischen der Drehzahlmeßeinrichtung (4, 168, 179) und dem zugehörigen Eingang (11) des Reglers (13, 179) eine das Differential der Motordrehzahl bildende Differenziereinrichtung (8, 179) vorgesehen ist, und daß an dem anderen Eingang (12) des Reglers (13, 179) ein der Motorausgangsdrehzahl beim Bremsbeginn proportionaler Sollwert zugeführt wird.

3. Schaltungsanordnung nach Anspruch 2, dadurch gekennzeichnet, daß die Bremseinrichtung (3) eine über eine Phasenanschnittsteuerung mit Gleichstrom versorgte Wirbelstrombremseinrichtung ist und daß der Regler (13) den Phasenanschnittwinkel steuert.

4. Schaltungsanordnung nach Anspruch 2, dadurch gekennzeichnet, daß der Anker und die Ständerwicklung des Motors (2) die Bremseinrichtung bilden, wobei die Ständerwicklung über eine Phasenanschnittsteuerung mit Gleichstrom versorgt wird, und daß der Regler (3) den Phasenanschnittwinkel steuert.

5. Schaltungsanordnung nach Anspruch 2, dadurch gekennzeichnet, daß der Regler (13) ein Integralregler ist.

6. Schaltungsanordnung nach Anspruch 5, dadurch gekennzeichnet, daß der Regler (13) ein Proportionalintegralregler ist.

7. Schaltungsanordnung nach den Ansprüchen 5 oder 6, dadurch gekennzeichnet, daß der Regler (13) eine Einrichtung (57, 61, 62 ; 142) zum Einstellen eines Anfangwertes für den Phasenanschnittwinkel aufweist.

8. Schaltungsanordnung nach Anspruch 2, dadurch gekennzeichnet, daß der Regler (13) einen Subtrahierer (18) und einen nachgeschalteten, als Integrator (25) gegengekoppelten Differenzverstärker (54) aufweist.

9. Schaltungsanordnung nach Anspruch 7, dadurch gekennzeichnet, daß die Einrichtung (61, 62, 57) zum Einstellen des Anfangswertes eine Gleichspannungsquelle sowie einen Umschalter (57) aufweist, durch den der Eingang des Integrators (25) während einer vorbestimmten Zeit zu Beginn des Bremsvorganges an die Gleichspannungsquelle und während der restlichen Zeit des Bremsvorganges an den Ausgang (19) des Subtrahierers (18) angeschaltet wird.

10. Schaltungsanordnung nach Anspruch 2, dadurch gekennzeichnet, daß der Regler (13) einen addierenden Integrator mit zwei Eingängen (11, 12) aufweist, wobei einem der Eingänge (11, 12) das jeweilige Signal mit negativem Vorzeichen zugeführt wird.

11. Schaltungsanordnung nach Anspruch 2, dadurch gekennzeichnet, daß zur Bildung des der Motorausgangsdrehzahl proportionalen Sollwerts eine lediglich bei Bremsbeginn die Motordrehzahl erfassende Sample- and Holdeinrichtung (14) mit einer Bewertungseinrichtung (68) vorgesehen ist, bei der der Betrag der Größe des Ausgangssignals proportional mit der Drehzahl steigt.

12. Schaltungsanordnung nach Anspruch 2, dadurch gekennzeichnet, daß die Differenziereinrichtung (8) einen als Differenzierer geschalteten Differenzverstärker (52) enthält.

13. Schaltungsanordnung nach Anspruch 2, dadurch gekennzeichnet, daß eine Einrichtung (31, 177) vorgesehen ist, die das Unterschreiten einer minimalen Motordrehzahl erkennt und den Regler (13, 179) in einen zweiten Zustand umschaltet, in dem er ein Signal mit einem konstanten Wert an die Bremseinrichtung abgibt.

14. Schaltungsanordnung nach Anspruch 13, dadurch gekennzeichnet, daß die Einrichtung (31) zum Erkennen der Minimaldrehzahl eine zweite Drehzahlmeßeinrichtung (78) aufweist, in die das der Motordrehzahl proportionale Signal eingespeist wird.

15. Schaltungsanordnung nach Anspruch 2, dadurch gekennzeichnet, daß das der Motordrehzahl proportionale Signal ein Frequenzsignal ist.

16. Schaltungsanordnung nach den Ansprüchen 13 und 14, dadurch gekennzeichnet, daß die Einrichtung (31) zum Erkennen der Minimaldrehzahl ein retriggerbares Monoflop (78) enthält, in das das der Motordrehzahl proportionale Frequenzsignal eingespeist wird und das beim Unterschreiten der Mindestdrehzahl das Signal zum Umschalten des Reglers (13) abgibt.

17. Schaltungsanordnung nach einem der vorhergehenden Ansprüche, dadurch gekennzeichnet, daß die Drehzahlmeßeinrichtung, die Subtrahiereinrichtung und der Regler mit den zugehörigen Umschaltern sowie die Sample- and Holdeinrichtung durch einen Mikrocomputer (100) verwirklicht sind.

18. Schaltungsanordnung nach einem der vorhergehenden Ansprüche, dadurch gekennzeichnet, daß die Differenziereinrichtung sowie die Einrichtung zum Erkennen der Mindestdrehzahl durch einen Mikrocomputer (100) verwirklicht sind.

19. Schaltungsanordnung nach Anspruch 2, dadurch gekennzeichnet, daß die Bremseinrichtung eine Wirbelstrombremse ist, deren Bremsgleichstrom gemäß dem jeweiligen Drehzahlverlauf nachgestellt wird.

20. Schaltungsanordnung nach Anspruch 2, dadurch gekennzeichnet, daß die Bremseinrichtung durch den Anker einer Drehfeldmaschine gebildet ist und der Bremsgleichstrom für die Ständerwicklung gemäß dem jeweiligen Drehzahlverlauf nachgestellt wird.

21. Schaltungsanordnung nach Anspruch 19, dadurch gekennzeichnet, daß der Bremsgleichstrom mittels einer Phasenanschnittsteuerung erzeugt wird, bei der der Anschnittwinkel gemäß dem jeweiligen Drehzahlverlauf geregelt wird.

**Claims**

1. A method of braking a motor having a braking system, wherein the motor speed is measured and controlled in dependence on a given desired value curve, characterized in that the differential quotient of the speed is formed in accordance with time from the measured course of the speed in time, and the actual value thus obtained is compared with a desired value which is selected proportionally to the initial motor speed at the start of braking.

2. A circuit arrangement for the performance of the method according to claim 1, having a speed measuring system (4, 168, 179) which measures the motor speed and derives a proportional signal therefrom and whose outputs are connected to one input (11) of a controller (13, 179) whose other input (12) is acted upon by a desired value and which generates in the brake system (3), in accordance with the difference between the two values supplied, a signal for a connected final control element, characterized in that a differentiating system (8, 179) forming the differential of the motor speed is provided between the speed measuring system (4, 168, 179) and the associated input (11) of the controller (13, 179), and a desired value proportional to the initial motor speed at the start of braking is supplied at the other input (2) of the controller (13, 179).

3. A circuit arrangement according to claim 2, characterized in that the brake system (3) is an eddy-current brake system supplied with d. c. via phase-angle control, and the controller (13) controls the phase-angle.

4. A circuit arrangement according to claim 2, characterized in that the armature and the stator winding of the motor (2) form the brake system, the stator winding being supplied with d. c. via a phase-angle control, and the controller (13) controls the phase-angle.

5. A circuit arrangement according to claim 2, characterized in that the controller (13) is an integral action controller.

6. A circuit arrangement according to claim 5, characterized in that the controller is a proportional-plus-integral controller.

7. A circuit arrangement according to claims 5 or 6, characterized in that the controller (13) has a system (57, 61, 62 ; 142) for adjusting an initial value for the phase angle.

8. A circuit arrangement according to claim 2, characterized in that the controller (13) has a subtracter (18) and a connected differential amplifier (54) connected via a negative feed-back loop as an integrator (25).

9. A circuit arrangement according to claim 7, characterized in that the system (61, 62, 57) for adjusting the initial value has a direct voltage source and a changeover switch (57) via which the input of the integrator (25) is connected to the direct voltage source for a predetermined period at the start of the braking operation and to the output (19) of the subtractor (18) during the remaining time of the braking operation.

10. A circuit arrangement according to claim 2, characterized in that the controller (13) has an adding integrator having two inputs (11, 12), the particular signal being supplied with a negative sign to one of the inputs (11, 12).

11. A circuit arrangement according to claim 2, characterized in that to form the desired value proportional to the initial motor speed, a sample-and-hold device (14) is provided which determines the motor speed only at the start of braking and has an evaluating device (68), in which the value of the output signal increases proportionately with the speed.

12. A circuit arrangement according to claim 2, characterized in that the differentiating device (8) comprises a differential amplifier (52) connected as a differentiator.

13. A circuit arrangement according to claim 2, characterized in that a device (31, 177) is provided which detects when a minimum motor speed has not been reached and switches over the controller (13, 179) to a second state, in which it delivers a signal with a constant value to the brake system.

14. A circuit arrangement according to claim 13, characterized in that the device (31) for detecting the minimum speed has a second speed measuring device (78), to which the signal proportional to the motor speed is fed.

15. A circuit arrangement according to claim 2, characterized in that the signal proportional to the motor speed is a frequency signal.

16. A circuit arrangement according to claims 13 and 14, characterized in that the device (31) for detecting the minimum speed contains a retriggerable monostable flip-flop (78), to which the frequency signal proportional to the motor speed is fed and which delivers the signal to switch over the controller (13) when the minimum speed is not reached.

17. A circuit arrangement according to one of the preceding claims, characterized in that the speed measuring system, the subtracting device and the controller, with the associated changeover switches and the sample-and-hold device, take the form of a microcomputer (100).

18. A circuit arrangement according to one of the preceding claims, characterized in that the differentiating device and the device for detecting the minimum speed take the form of a microcomputer (100).

19. A circuit arrangement according to claim 2, characterized in that the brake system is an eddy-current brake whose braking d. c. is adjusted in accordance with the particular course of the speed.

20. A circuit arrangement according to claim 2, characterized in that the brake system is formed by the armature of an induction machine and the braking d. c. for the stator winding is adjusted in accordance with the particular course of the speed.

21. A circuit arrangement according to claim 19, characterized in that the braking d. c. is produced by a phase-angle control with which the phase-angle is controlled in accordance with the particular course of the speed.

**Revendications**

1. Procédé pour le freinage d'un moteur équipé d'un dispositif de freinage, dans lequel le régime du moteur est mesuré et régulé en fonction d'une courbe de valeurs de consigne prédéterminée, caractérisé en ce que la dérivée du régime est formée en fonction du temps à partir de l'évolution dans le temps mesurée dudit régime et la valeur réelle ainsi obtenue est comparée à une valeur de consigne qui est choisie proportionnelle au régime de départ du moteur au début du freinage.

2. Montage pour la mise en œuvre du procédé selon la revendication 1, comprenant un dispositif de mesure de régime (4, 168, 179) qui mesure le régime du moteur et produit un signal proportionnel et dont les sorties sont reliées à une entrée (11) d'un régulateur (13, 179) dont l'autre entrée (12) reçoit une valeur de consigne et qui génère, en fonction de la différence entre les deux valeurs amenées, un signal pour un organe de réglage dans le dispositif de freinage (3), caractérisé en ce qu'un dispositif de différenciation (8, 179), formant la différentielle du régime du moteur, est prévu entre le dispositif de mesure de régime (4, 168, 179) et l'entrée (11) associée du régulateur (13, 179), et qu'une valeur de consigne, qui est proportionnelle au régime de départ du moteur au début du freinage, est amenée à l'autre entrée (12) du régulateur (13, 179).

3. Montage selon la revendication 2, caractérisé en ce que le dispositif de freinage (3) est un dispositif de freinage à courants de Foucault alimenté en courant continu par une commande de retard d'amorçage et que le régulateur (13) commande l'angle d'amorçage.

4. Montage selon la revendication 2, caractérisé en ce que l'induit et l'enroulement du stator du moteur (2) forment le dispositif de freinage, l'enroulement du stator étant alimenté en courant continu par une commande de retard d'amorçage, et que le régulateur (3) commande l'angle d'amorçage.

5. Montage selon la revendication 2, caractérisé en ce que le régulateur (13) est un régulateur intégral.

6. Montage selon la revendication 5 ou 6, caractérisé en ce que le régulateur (13) est un régulateur intégral proportionnel.

7. Montage selon la revendication 5 ou 6, caractérisé en ce que le régulateur (13) comprend un dispositif (57, 61, 62 ; 142) pour le réglage d'une valeur initiale pour l'angle d'amorçage.

8. Montage selon la revendication 2, caractérisé en ce que le régulateur (13) comprend un soustracteur (18) suivi d'un amplificateur différentiel (54) à contre-réaction monté en intégrateur (25).

9. Montage selon la revendication 7, caractérisé en ce que le dispositif (61, 62, 57) pour le réglage de la valeur initiale comporte une source de tension continue ainsi qu'un commutateur (57) par lequel l'entrée de l'intégrateur (25) est connectée à la source de tension continue pendant une durée prédéterminée au début de l'opération de freinage et à la sortie (19) du soustracteur (18) pendant la durée restante de l'opération de freinage.

10. Montage selon la revendication 2, caractérisé en ce que le régulateur (13) comprend un intégrateur additionneur avec deux entrées (11, 12), le signal correspondant étant amené avec un signe négatif à l'une des entrées (11, 12).

11. Montage selon la revendication 2, caractérisé en ce que pour la formation de la valeur de consigne proportionnelle au régime de départ du moteur, il est prévu un dispositif d'échantillonnage et de mémorisation (14), saisissant le régime du moteur uniquement au début de freinage, avec un dispositif d'évaluation (68) dans lequel la valeur de la grandeur du signal de sortie augmente proportionnellement au régime.

12. Montage selon la revendication 2, caractérisé en ce que le dispositif de différenciation (8) comprend un amplificateur différentiel (52) monté en différentiateur.

13. Montage selon la revendication 2, caractérisé en ce qu'un dispositif (31, 177) est prévu qui détecte le passage au-dessous d'un régime minimal du moteur et commute le régulateur (13, 179) dans un deuxième état, dans lequel il émet un signal d'une valeur constante au dispositif de freinage.

14. Montage selon la revendication 13, caractérisé en ce que le dispositif (31) pour la détection du régime minimal comporte un deuxième dispositif de mesure de régime (78), auquel est appliqué le signal proportionnel au régime du moteur.

15. Montage selon la revendication 2, caractérisé en ce que le signal proportionnel au régime du moteur est un signal fréquentiel.

16. Montage selon les revendications 13 et 14, caractérisé en ce que le dispositif (31) pour la détection du régime minimal contient une bascule monostable (78) redéclenchable, à laquelle est appliqué le signal fréquentiel proportionnel au régime du moteur et qui émet, lors du passage au-dessous du régime minimal, le signal pour la commutation du régulateur (13).

17. Montage selon l'une quelconque des revendications précédentes, caractérisé en ce que le dispositif de mesure de régime, le dispositif de soustraction et le régulateur sont réalisés avec les commutateurs associés et le dispositif d'échantillonnage et de mémorisation sous forme d'un micro-ordinateur (100).

18. Montage selon l'une quelconque des revendications précédentes, caractérisé en ce que le dispositif de différenciation ainsi que le dispositif pour la détection du régime minimal sont constitués par un micro-ordinateur (100).

19. Montage selon la revendication 2, caractérisé en ce que le dispositif de freinage est un frein à courants de Foucault dont le courant continu de freinage est régulé en fonction de l'évolution du régime.

20. Montage selon la revendication 2, caractérisé en ce que le dispositif de freinage est formé par l'induit d'un générateur à induction et le courant continu de freinage pour l'enroulement du stator est régulé en fonction de l'évolution du régime.

21. Montage selon la revendication 19, caractérisé en ce que le courant continu de freinage est généré au moyen d'une commande de retard d'amorçage, dans laquelle l'angle d'amorçage est réglé en fonction de l'évolution du régime.

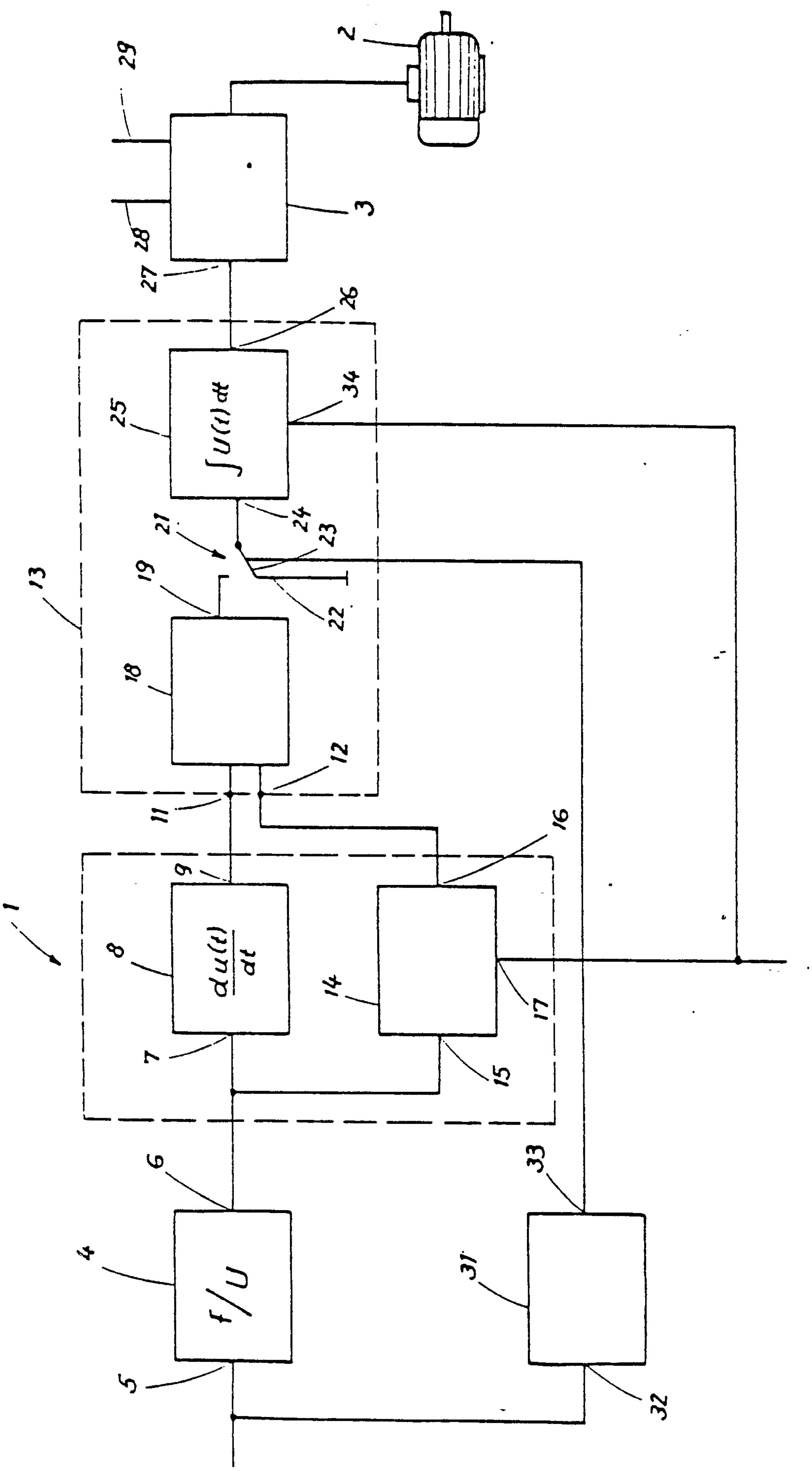


Fig. 1

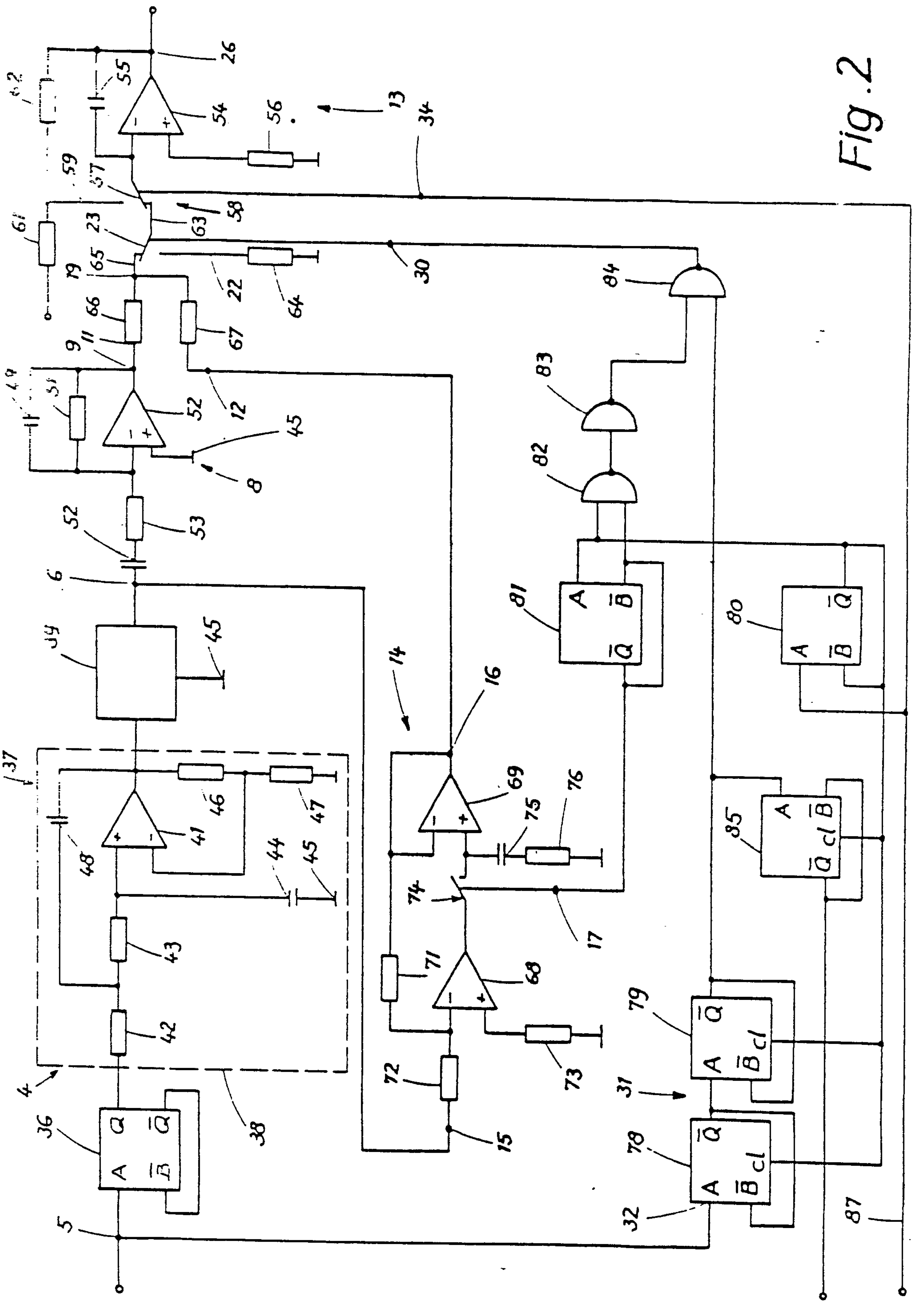

Fig. 2

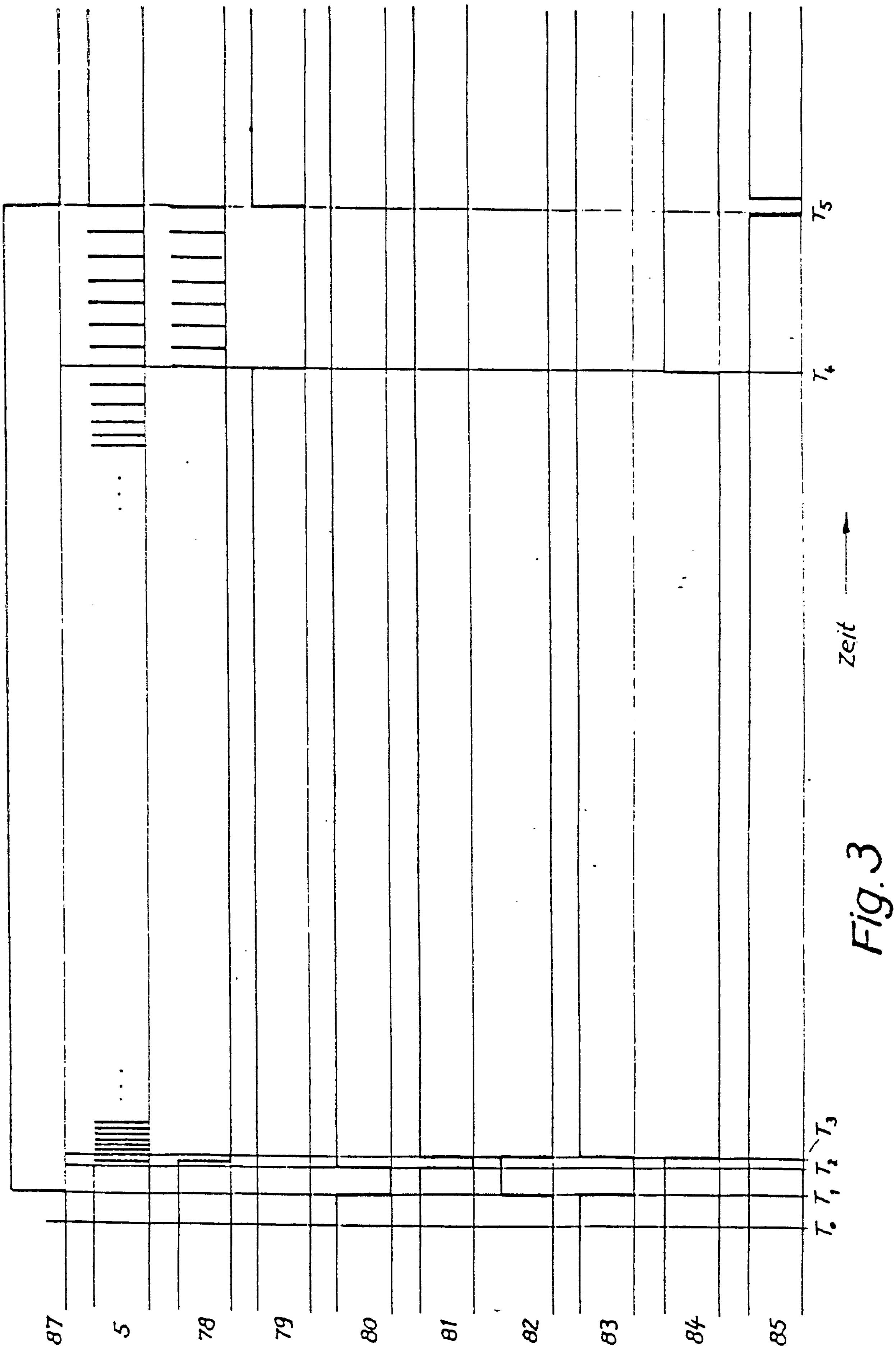


Fig. 3

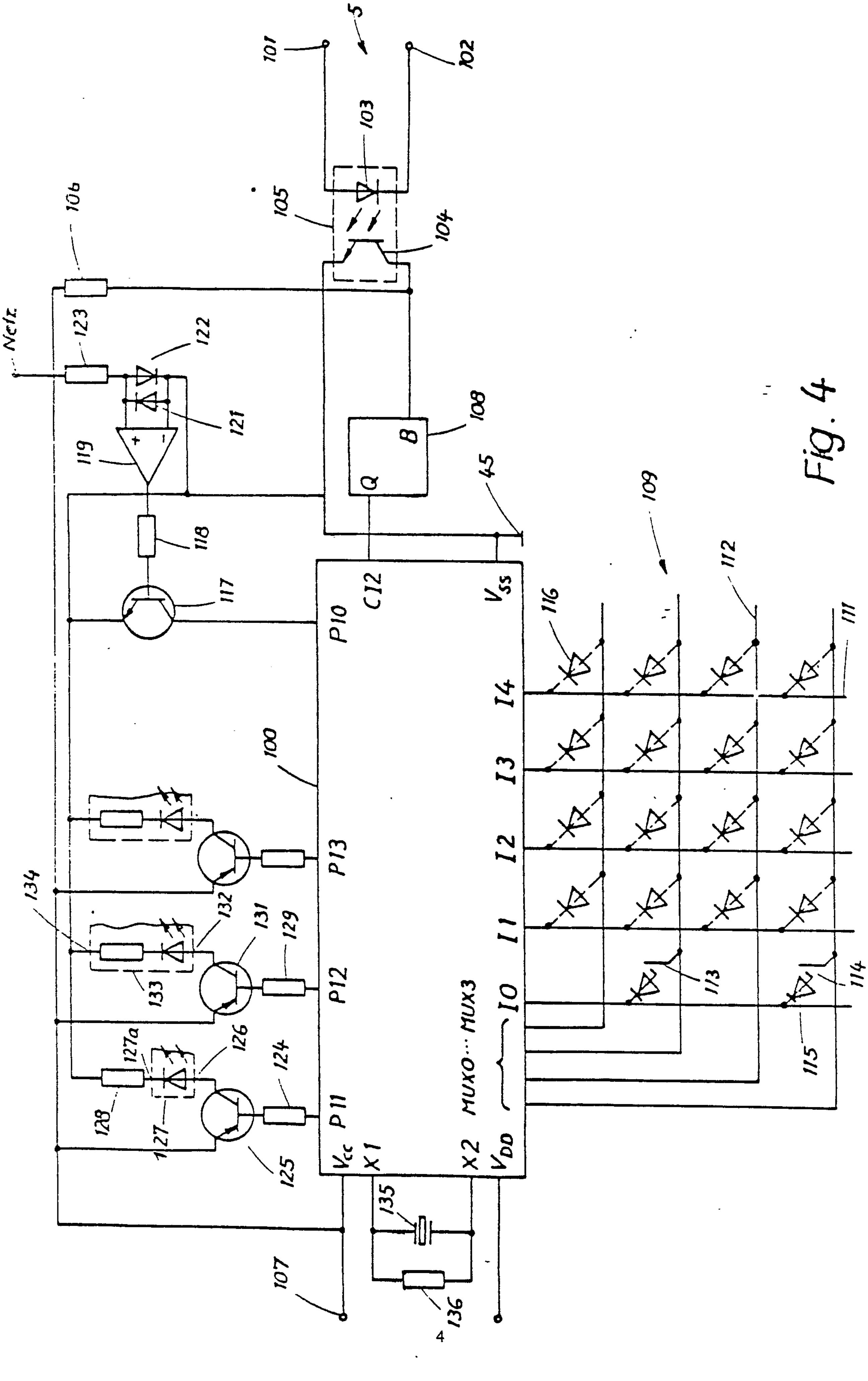
Netz
P10
P11
P12
P13
C12
Q
B
$V_{SS}$
$V_{CC}$
$V_{DD}$
X1
X2
MUX0 ··· MUX3
I0
I1
I2
I3
I4

Fig. 4

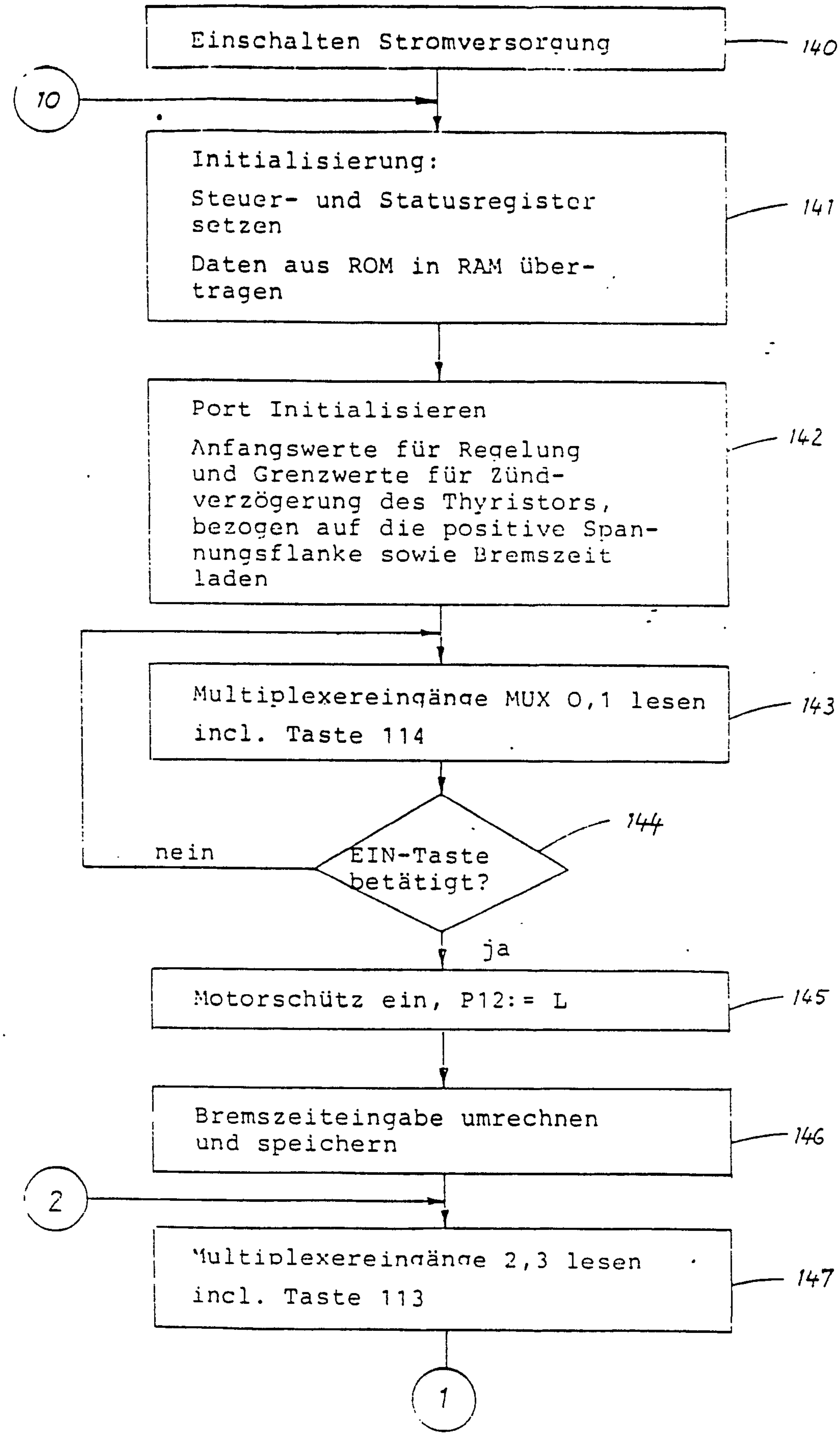
Einschalten Stromversorgung
140
10
Initialisierung:
Steuer- und Statusregister setzen
Daten aus ROM in RAM übertragen
141
Port Initialisieren
Anfangswerte für Regelung und Grenzwerte für Zündverzögerung des Thyristors, bezogen auf die positive Spannungsflanke sowie Bremszeit laden
142
Multiplexereingänge MUX 0,1 lesen incl. Taste 114
143
nein
EIN-Taste betätigt?
144
ja
Motorschütz ein, P12:= L
145
Bremszeiteingabe umrechnen und speichern
146
2
Multiplexereingänge 2,3 lesen incl. Taste 113
147
1

Fig. 5A

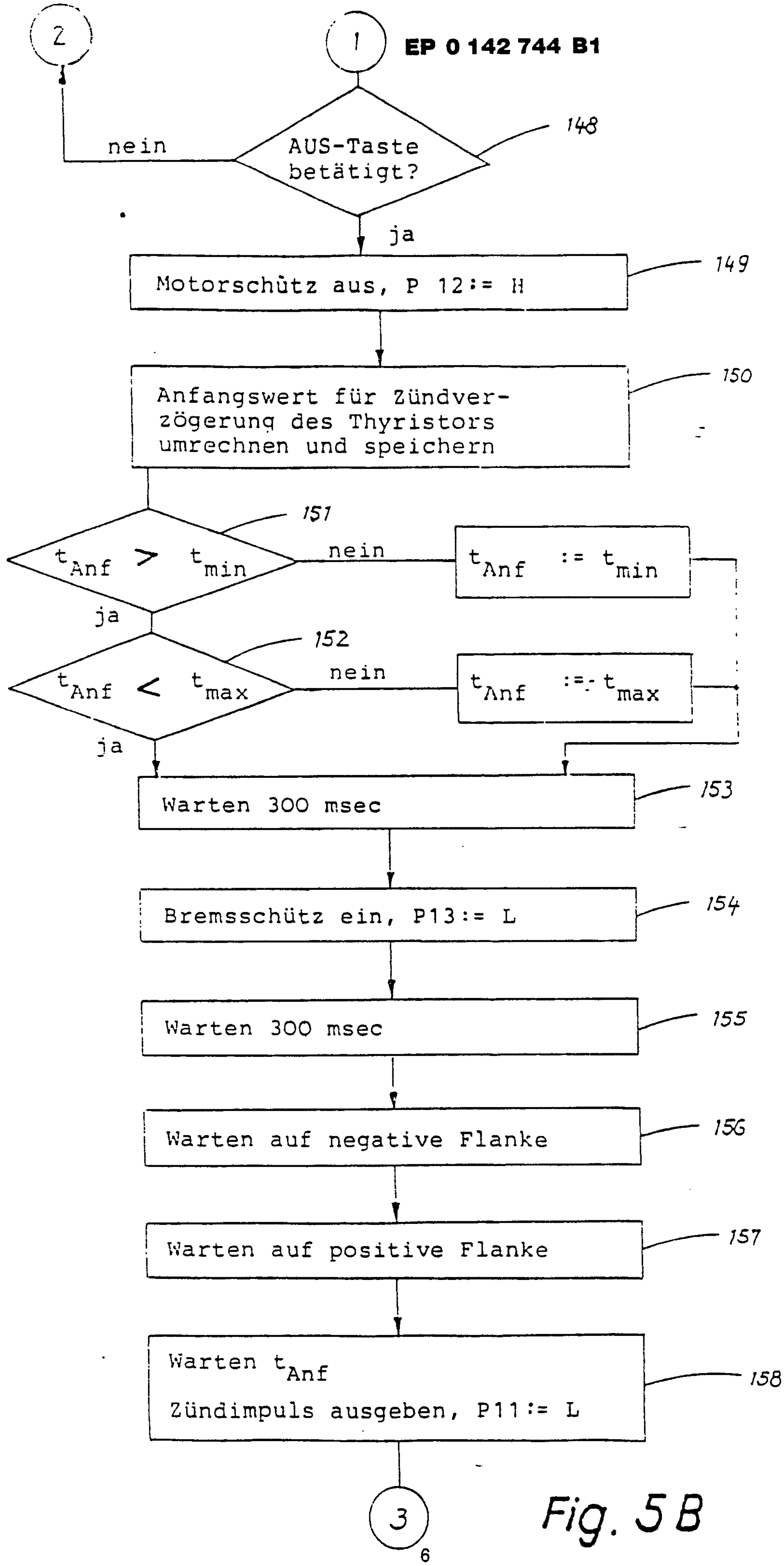
2
1
AUS-Taste betätigt?
148
nein
ja
Motorschütz aus, P 12:= H
149
Anfangswert für Zündverzögerung des Thyristors umrechnen und speichern
150
$t_{Anf} > t_{min}$
151
nein
$t_{Anf} := t_{min}$
ja
$t_{Anf} < t_{max}$
152
nein
$t_{Anf} := t_{max}$
ja
Warten 300 msec
153
Bremsschütz ein, P13:= L
154
Warten 300 msec
155
Warten auf negative Flanke
156
Warten auf positive Flanke
157
Warten $t_{Anf}$
Zündimpuls ausgeben, P11:= L
158
3

Fig. 5B

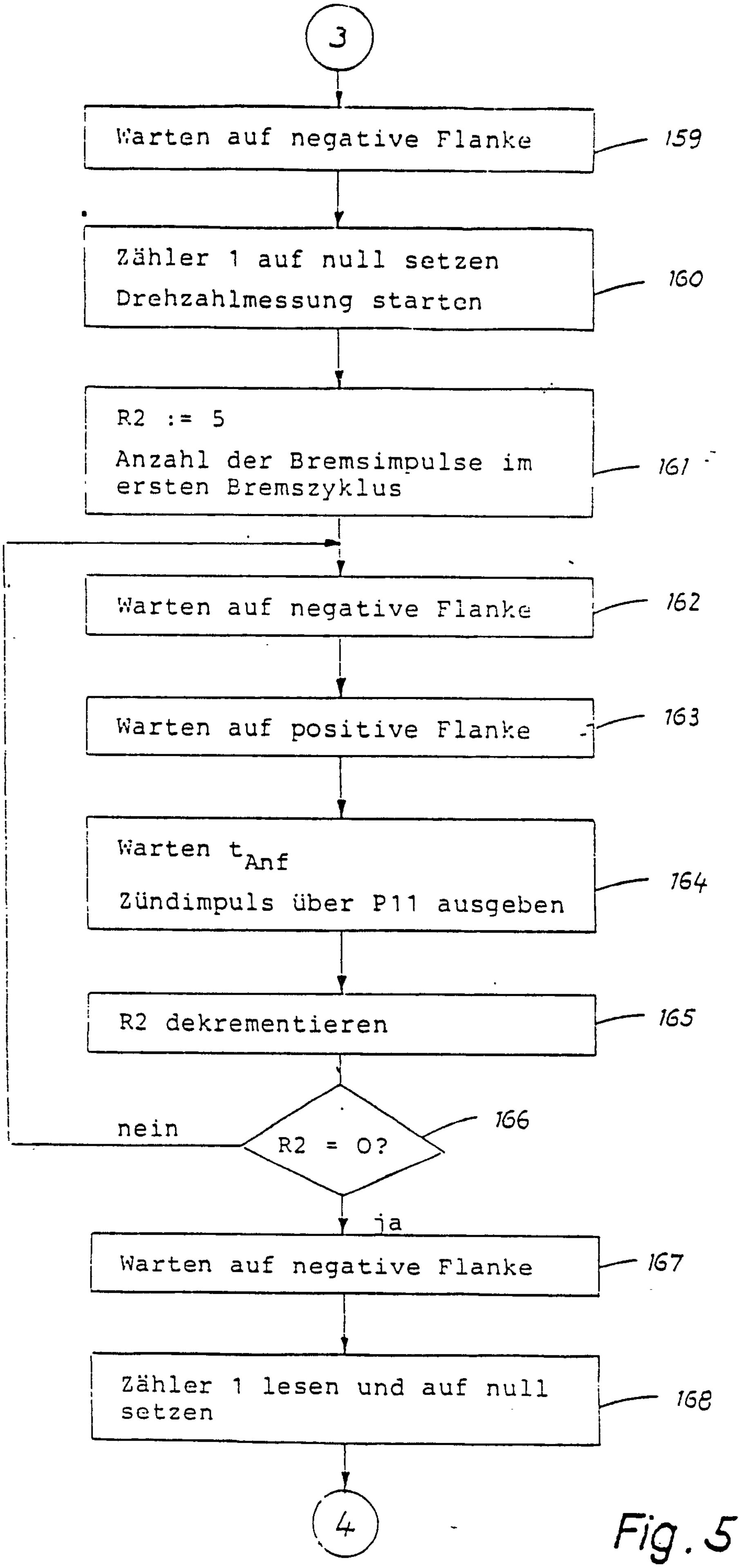
3
Warten auf negative Flanke
159
Zähler 1 auf null setzen
Drehzahlmessung starten
160
R2 := 5
Anzahl der Bremsimpulse im ersten Bremszyklus
161
Warten auf negative Flanke
162
Warten auf positive Flanke
163
Warten $t_{Anf}$
Zündimpuls über P11 ausgeben
164
R2 dekrementieren
165
nein
R2 = 0?
166
ja
Warten auf negative Flanke
167
Zähler 1 lesen und auf null setzen
168
4

Fig. 5 C

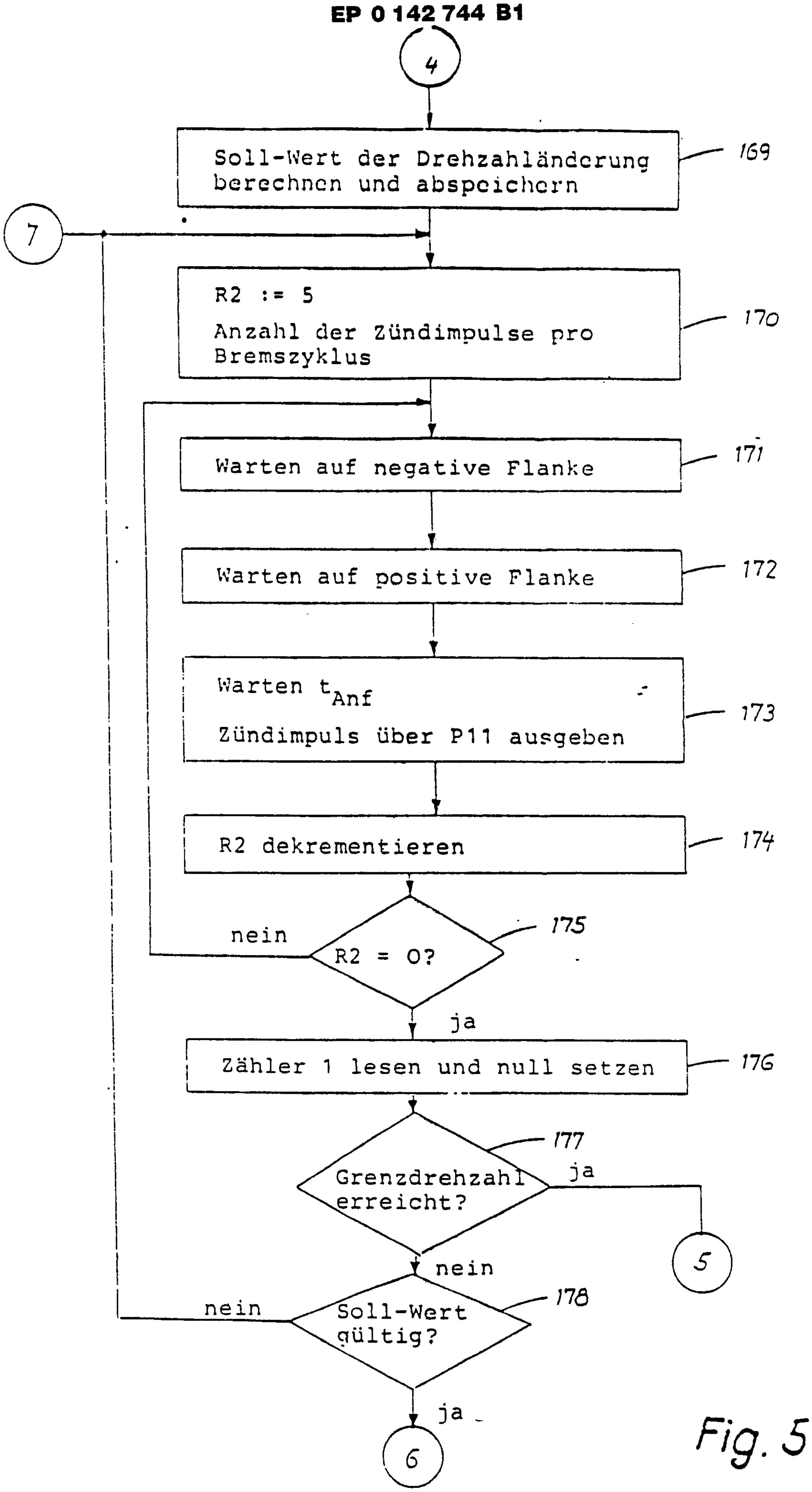
4
Soll-Wert der Drehzahländerung berechnen und abspeichern
169
7
R2 := 5
Anzahl der Zündimpulse pro Bremszyklus
170
Warten auf negative Flanke
171
Warten auf positive Flanke
172
Warten $t_{Anf}$
Zündimpuls über P11 ausgeben
173
R2 dekrementieren
174
nein
R2 = 0?
175
ja
Zähler 1 lesen und null setzen
176
Grenzdrehzahl erreicht?
177
ja
5
nein
nein
Soll-Wert gültig?
178
ja
6

Fig. 5 D

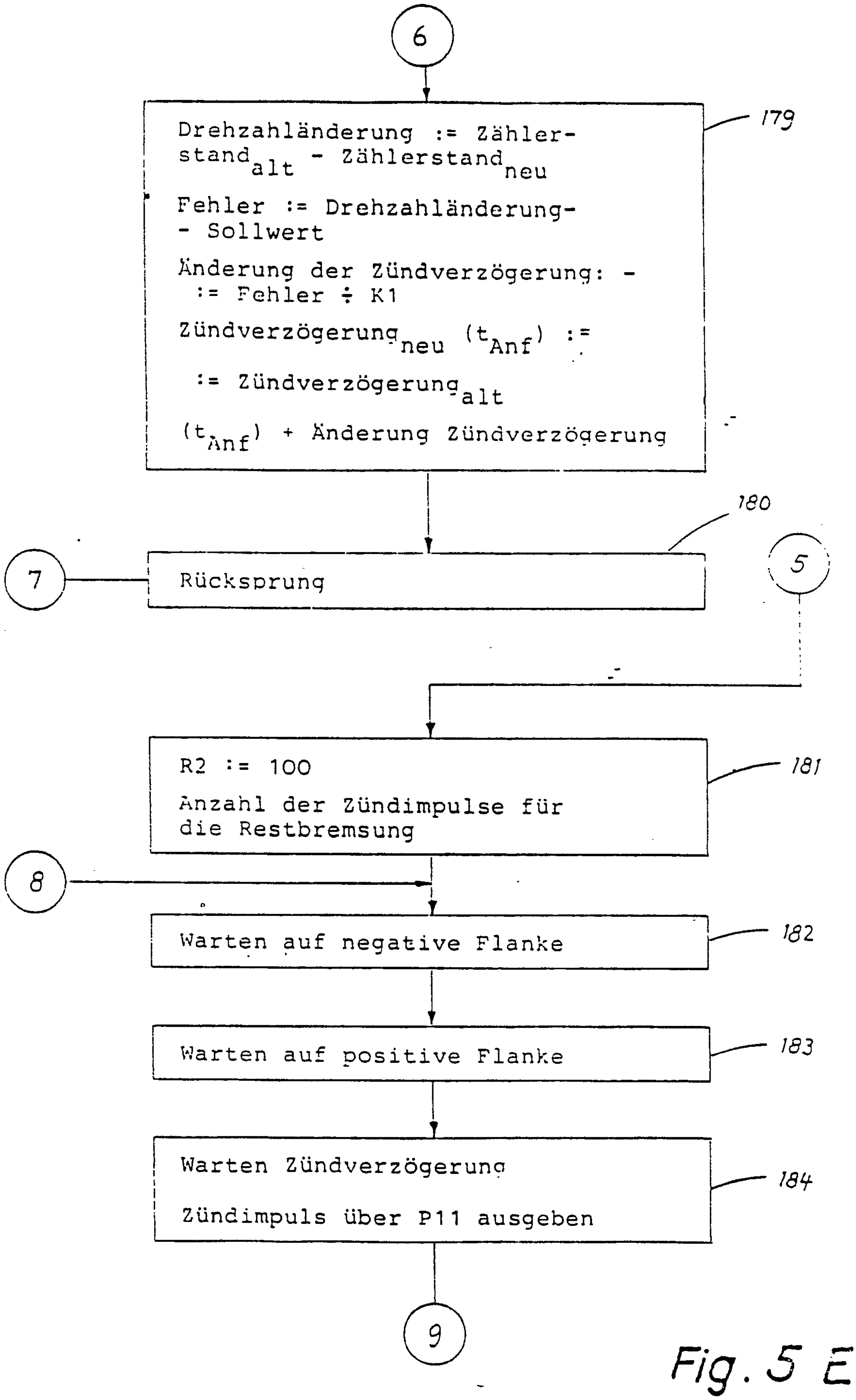
6
Drehzahländerung := Zählerstand alt - Zählerstand neu
Fehler := Drehzahländerung - Sollwert
Änderung der Zündverzögerung: - := Fehler ÷ K1
Zündverzögerung neu (t Anf) := := Zündverzögerung alt (t Anf) + Änderung Zündverzögerung
179
180
7
Rücksprung
5
R2 := 100
Anzahl der Zündimpulse für die Restbremsung
181
8
Warten auf negative Flanke
182
Warten auf positive Flanke
183
Warten Zündverzögerung
Zündimpuls über P11 ausgeben
184
9

Fig. 5 E

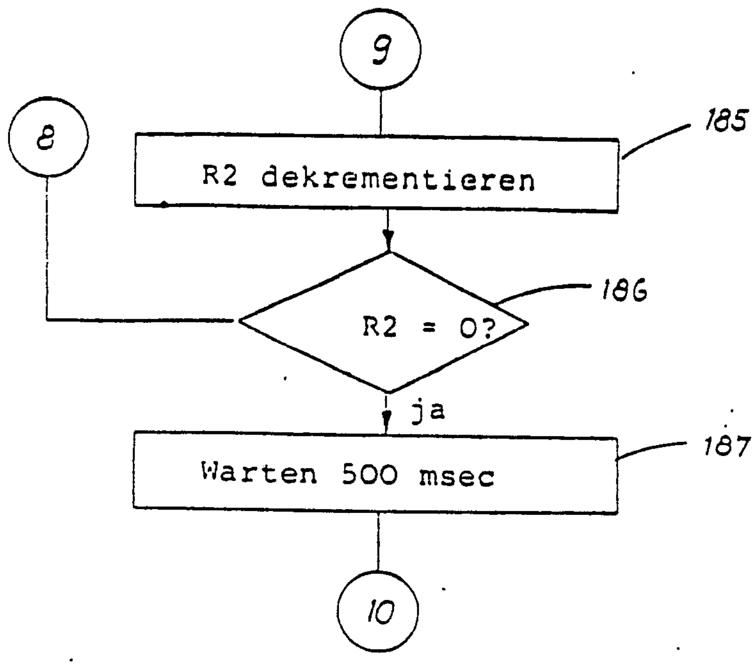


Fig. 5F